# EUROPEAN PATENT APPLICATION

(11) **EP 1 577 885 A2**
(43) Date of publication of application: **21.09.2005**
(21) Application number: 05012169.8
(22) Date of filing: 21.09.2001
(51) Int. Cl.: G11B 7/005, G11B 19/12, G11B 20/00, G11B 23/30

(54) **Optical disc and a reproduction method, reproduction apparatus, and recording apparatus for the same**

(30) Priority: 22.09.2000 JP 2000288346; 26.09.2000 JP 2000292034; 24.10.2000 JP 2000323676
(62) Divisional of application: 01967800.2
(71) Applicant: MATSUSHITA ELECTRIC INDUSTRIAL CO., LTD., Osaka 571-8501 (JP)
(72) Inventor: Shoji, Mamoru, Sakai-shi Osaka 591-8032 (JP); Nakamura, Atsushi, Moriguchi-shi Osaka 570-0002 (JP); Senga, Hisashi, Neyagawa-shi Osaka 572-0055 (JP); Takahashi, Rie, Hirakata-shi Osaka 573-0036 (JP); Miyashita, Harumitsu, Nara-shi Nara 631-0013 (JP); Ishida, Takashi, Yawata-shi Kyoto 614-8331 (JP); Ishibashi, Hiromichi, Ibaraki-shi Osaka 567-0876 (JP)
(74) Representative: Eisenführ, Speiser & Partner

(57) **Abstract**

An optical disk, and a method and apparatus for reproducing and/or recording data to the disk are provided for preventing illegal copying of authorized disks recording copyrighted digital content. The optical disk 10 has a control area 12 for storing control data, a data area 14 for storing main digital data (content), and an identification area 13 for storing sub-digital data specific to the main digital data. The sub-digital data is recorded as a pit sequence at a locally phase modulated clock timing. When disk identification data is recorded as the sub-digital data, key information stored to the reproduction apparatus is compared with identification data (sub-digital data) detected from jitter fluctuations in the identification area 13 when content is reproduced from the optical disk 10. If a specific correlation is thus confirmed, the disk is recognized as a legally copied disk and reproduction is enabled. Illegal copies can thus be prevented.

## Description

### Technical Field

The present invention relates to an optical recording medium for reproducing information recorded thereto by emitting a convergent light beam to the recording medium and then detecting light reflected from the recording medium.

### Background Art

Optical disks, of which the DVD (Digital Versatile/Video Disc) is typical, are now commonly used for recording large amounts of digital data, including both computer data and AV (audio/video) data. DVD-ROM disks, for example, storing two hours or more of high quality video data are widely available.

Technology for preventing the illegal copying of digital copyrighted material to another medium is needed in order to ensure the secure distribution of copyrighted digital content.

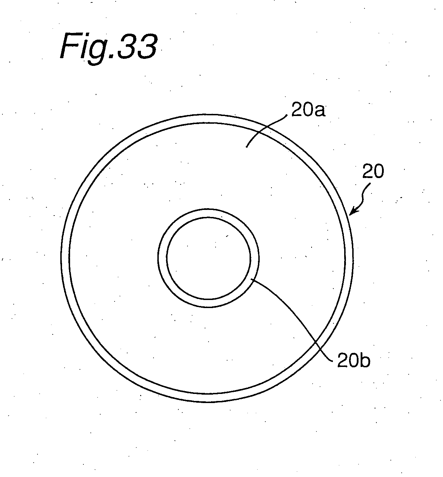

Content encryption is one prior art method of preventing illegal copying (see Nikkei Electronics, 1996. 11. 18, pp. 13-14). Fig. 33 shows a general data recording area of DVD. As shown in Fig. 33, the recording area of a DVD 20 includes a user-accessible data area 20a where the content is stored, and a control data area 20b which the user cannot access. The method of the prior art encrypts compressed digital content such as a movie using three levels of secret keys (the title key, disk key, and master key), and then records the encrypted content to the user-accessible data area 20a. The most important of these three encryption keys is the master key, and only licensed DVD equipment manufacturers are given the master key. The disk key and title key are required to decrypt the individual DVDs and titles thereon, and are recorded to the control data area 20b (lead-in area) which is not accessible to the user after being encrypted using the master key.

This method makes decrypting encrypted content by an unlicensed DVD reproduction apparatus impossible, and thus prevents the illegal mass reproduction and sale of DVDs recording unencrypted digital copyrighted content.

A disadvantage to this prior art technology is that so-called pirated editions cannot be prevented. More specifically, when an exact copy of all content from all areas of the DVD, including the control data area, is made, the encrypted content can still be read and decrypted by a licensed DVD reproduction apparatus just like any legal copy of the DVD. Note that such exact copies are referred to herein as "dead copies. "

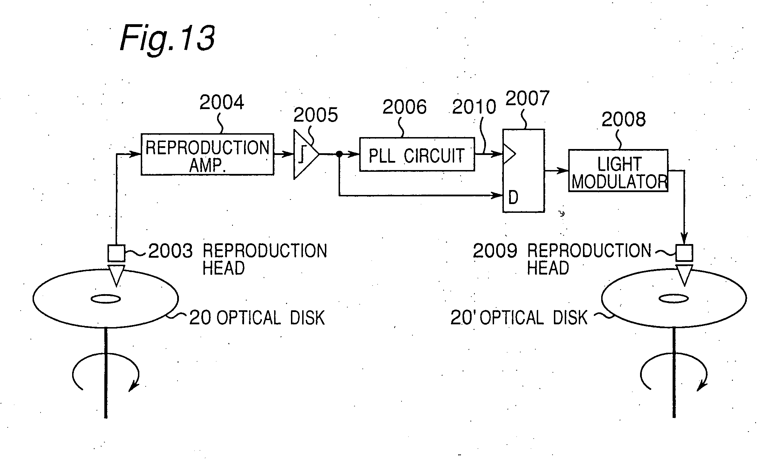

A method for making a dead copy is described next with reference to Fig. 13.

Referring to Fig. 13, the speed of the spindle motors of the optical disk 20 which is a source disk and the optical disk 20' which is a destination disk are perfectly synchronized, and the data from the source disk 20 is reproduced using the reproduction head 2003. The reproduction signal is then amplified by a reproduction amplifier 2004, digitized by the digitizer 2005, and input to a PLL (phase-locked loop) circuit 2006. The PLL 2006 [1006] generates a clock signal 2010 based on the input signal. A flip-flop 2007 synchronizes and outputs the output signal from the digitizer 2005 to the light modulator 2008 at the timing controlled by timing signal 2010 from the PLL. The light modulator 2008 generates a light modulation signal from the signal input thereto, and the signal is then recorded to the destination disk 20' by the recording head 2009.

This process produces an identical copy of the entire source disk, including the control data area 20b that is inaccessible to the user. The disk is therefore indistinguishable from an authorized disk, and the content can be decrypted and played back.

This means that even if illegal production of DVDs containing encrypted content is possible, it is not possible to prevent illegally copying containing encrypted content identical to the original DVD. Low cost distribution of such illegal copies then obviously infringes on the copyright of the content.

### Disclosure of Invention

With respect to the problems described above, an object of the present invention is to provide an optical disk capable of preventing identical copies from being made of digital copyrighted content recorded thereto. A further object is to provide a recording and reproduction apparatus and a recording and reproduction method for the optical disk.

In a fist aspect of the invention, provided is an optical disk comprising main digital data recorded by optically readable recording marks, and sub-digital data superposed with the main digital data by slightly displacing position or shape of the recording marks and recorded to the disk. A plurality of areas each storing the same sub-digital data are provided on the disk for a single content recorded by the main digital data.

In a second aspect of the invention, provided is an optical disk comprising main digital data recorded by optically readable recording marks, and sub-digital data superposed with the main digital data by slightly displacing position or shape of the recording marks and recorded to the disk. A plurality of areas each storing different sub-digital data is provided for a single content recorded by the main digital data.

In a third aspect of the invention, provided is an optical disk comprising main digital data recorded by optically readable recording marks, and sub-digital data superposed with the main digital data by slightly displacing position or shape of the recording marks and recorded to the disk. Different sub-digital data is provided for different content recorded by the main digital data.

In a fourth aspect of the invention, provided is an optical disk comprising main digital data recorded by optically readable recording marks, and sub-digital data superposed with the main digital data by slightly displacing position or shape of the recording marks and recorded to the disk. The sub-digital data is formed in an area different from a data area where content is recorded by the main digital data.

In a fifth aspect of the invention, provided is an optical disk comprising main digital data recorded by optically readable recording marks, and sub-digital data superposed with the main digital data by slightly displacing position or shape of the recording marks and recorded to the disk. The sub-digital data is formed in an area different from a data area where content is recorded by the main digital data and a control area where control data is recorded.

In a sixth aspect of the invention, provided is a reproducing method of reproducing an optical disk storing main digital data recorded by optically readable recording marks and sub-digital data, in which the sub-digital data is superposed with the main digital data and is recorded to the disk by slightly displacing positions or shapes of the recording marks in a track direction of the recording mark. The method comprises constructing a pattern based on the sub-digital data, comparing the pattern with a predetermined key information, and restricting a reproduction of content recorded by the main digital data when a correlation between the pattern and the key information is not confirmed.

In a seventh aspect of the invention, provided is an optical disk comprising main digital data recorded by optically readable recording marks, sub-digital data recorded by optically readable recording marks, and sub-digital data management information used to extract the sub-digital data.

In a eighth aspect of the invention, provided is a reproducing apparatus for reproducing an optical disk. The optical disk stores main digital data recorded by optically readable recording marks, sub-digital data recorded by phase modulation slightly displacing edge positions of the recording marks in a track direction of the disk, and sub-digital data management information used to extract the sub-digital data. The apparatus comprises a section for reproducing the main digital data from the optical disk, and a section for extracting the sub-digital data.

In a ninth aspect of the invention, provided is a recording apparatus for recording main digital data to an optical disk by forming optically readable recording marks on the disk. The apparatus comprises a section for recording sub-digital data by phase modulation which displaces edge positions of the recording marks a slight amount in a track direction of the disk. The sub-digital data recording section forms the recording marks so that edges of the recording marks corresponding to the main digital data at positions of phase leading or lagging by a predetermined small amount. The sub-digital data recording section includes a section for recording sub-digital data management information which is required to extract the sub-digital data.

In a tenth aspect of the invention, provided is an optical disk comprising main digital data recorded by optically readable recording marks, and sub-digital data recorded by changing positions or shapes of specific recording marks a slight amount. The main digital data encrypted by the sub-digital data.

In an eleventh aspect of the invention, provided is a recording apparatus for recording main digital data to an optical disk by forming recording marks on the optical disk. The apparatus comprises a sub-digital data recording section for recording sub-digital data by changing positions or shapes of recording mark edges a slight amount, and a main digital data encrypting section for encrypting the main digital data based on the sub-digital data.

In a twelfth aspect of the invention, provided is a reproducing apparatus for reproducing data from an optical disk. The optical disk stores main digital data recorded by optically readable recording marks and sub-digital data, the main digital data being encrypted by the sub-digital data. The apparatus comprises a detecting section for detecting the recording marks formed on the optical disk, an sub-digital data extracting section for extracting the sub-digital data from a channel signal corresponding to a series of the detected recording marks, and a decrypting section for decoding the encrypted main digital data based on the sub-digital data extracted by the extracting section.

Other objects and attainments together with a fuller understanding of the invention will become apparent and appreciated by referring to the following description and claims taken in conjunction with the accompanying drawings.

### Brief Description of Drawings

Fig. 1 describes areas of an optical disk in a first embodiment of the present invention;
Fig. 2 is an enlarged view of the identification area in Fig. 1;
Fig. 3 describes the phase modulated bits composing the sub-digital data in the first embodiment of the invention;
Fig. 4 is a block diagram of a reproduction apparatus for an optical disk in a first embodiment of the invention;
Fig. 5A Fig.shows a track in which sub-digital data is recorded;
Fig. 5B shows an output signal waveform of the phase comparator when the track shown in Fig. 5A is reproduced;
Fig. 5C shows the output signal waveform of the low-pass filter (LPF) when the track shown in Fig. 5A is reproduced;
Fig. 5D shows the output signal waveform of the amplitude detector when the track shown in Fig. 5A is reproduced;
Fig. 6 describes areas of another optical disk in the first embodiment of the invention;
Fig. 7 describes areas of yet another optical disk in the first embodiment of the invention;
Fig. 8 describes areas of yet another optical disk in the first embodiment of the invention;
Fig. 9 describes the relationship between the content identification data recorded to the optical disk and the identification area where the identification data is recorded;
Fig. 10 describes modulation that shifts bits in the radial direction to record the sub-digital data;
Fig. 11 describes areas of yet another optical disk in the first embodiment of the invention;
Fig. 12 describes areas of yet another optical disk in the first embodiment of the invention;
Fig. 13 is a block diagram of an illegal copy production system according to the prior art;
Fig. 14A describes areas of an optical disk;
Fig. 14B describes a method of modulating sub-digital data;
Fig. 14C describes content of management information;
Fig. 15 is a block diagram showing an optical disk recording apparatus according to a second embodiment of the invention;
Fig. 16 is a block diagram showing the detailed configuration of the formatter in the recording apparatus of the second embodiment;
Fig. 17 block diagram showing the detailed configuration of the phase modulator in the recording apparatus of the second embodiment;
Fig. 18 is a block diagram showing the detailed configuration of the sub-digital data generator in the recording apparatus of the second embodiment;
Fig. 19 is a graph showing the frequency distribution of jitter for pits formed by the recording apparatus of the second embodiment;
Fig. 20 is a timing chart of the main signals in the recording apparatus of the second embodiment;
Fig. 21 shows the relationship between the secret key, pseudo-random number series, and recording data;
Fig. 22 is a timing chart of the main signals in the recording apparatus according to the second embodiment of the invention;
Fig. 23A shows areas of an optical disk;
Fig. 23B describes content of management information;
Fig. 24A shows areas of an optical disk;
Fig. 24B describes content of management information;
Fig. 25 is a block diagram of an optical disk reproduction apparatus according to a second embodiment of the invention;
Fig. 26 is a block diagram showing the detailed configuration of the clock extracting section in the optical disk reproduction apparatus according to the second embodiment of the invention;
Fig. 27A is a circuit diagram showing the configuration of the phase error signal separator in the clock extracting section;
Fig. 27B is a timing chart of the signals used to describe the operation of the phase error signal separator;
Fig. 28 is a block diagram showing the detailed configuration of the reproduction signal processor in the optical disk reproduction apparatus according to the second embodiment of the invention;
Fig. 29 is a block diagram showing the detailed configuration of the synchronous detector in the optical disk reproduction apparatus according to the second embodiment of the invention;
Fig. 30 shows an example of an analog signal wave output from the integrator in the optical disk reproduction apparatus according to the second embodiment of the invention;
Fig. 31 is a block diagram showing the detailed configuration of the verification section in the optical disk reproduction apparatus according to the second embodiment of the invention;
Fig. 32 is a timing chart of the displacement pattern gate;
Fig. 33 describes the recording area of a prior art optical disk;
Fig. 34 describes the control data area and user data area in an optical disk according to a third embodiment of the invention;
Fig. 35 is a block diagram of an optical disk recording apparatus according to the third embodiment of the invention;
Fig. 36 is a timing chart of the main signals in the optical disk recording apparatus according to the third embodiment of the invention;
Fig. 37 is a block diagram showing the detailed configuration of the encryption section in the optical disk recording apparatus according to the third embodiment of the invention;
Fig. 38 is a block diagram showing the detailed configuration of the formatter in the optical disk recording apparatus according to the third embodiment of the invention;
Fig. 39 shows the relationship between the encryption key, pseudo-random number series, and recording data;
Fig. 40 is a circuit diagram showing the configuration of the pseudo-random number generator in the optical disk recording apparatus according to the third embodiment of the invention;
Fig. 41 is a block diagram showing the detailed configuration of the phase modulator in the optical disk recording apparatus according to the third embodiment of the invention;
Fig. 42 shows the surface of a DVD having bits formed by the optical disk recording apparatus according to the third embodiment of the invention;
Fig. 43 is a graph showing the frequency distribution of jitter from pits formed by the optical disk recording apparatus according to the third embodiment of the invention;
Fig. 44 is a block diagram showing the configuration of an optical disk reproduction apparatus according to the third embodiment of the invention;
Fig. 45 is a block diagram showing the detailed configuration of the clock extracting section in the optical disk reproduction apparatus according to the third embodiment of the invention;
Fig. 46A is a circuit diagram showing the configuration of the phase error signal separator in the clock extracting section;
Fig. 46B is a signal timing chart used to describe the operation of the phase error signal separator;
Fig. 47 is a block diagram showing the detailed configuration of reproduction signal processor in the optical disk reproduction apparatus according to the third embodiment of the invention;
Fig. 48 is a circuit diagram showing the configuration of the synchronous detector in the optical disk reproduction apparatus according to the third embodiment of the invention;
Fig. 49 shows an example of an analog signal wave output from the integrator in the optical disk reproduction apparatus according to the third embodiment of the invention;
Fig. 50 is a block diagram showing the detailed configuration of the encryption key reproduction circuit in the optical disk reproduction apparatus according to the third embodiment of the invention;
Fig. 51 describes operation when an enable signal produced illegally is input to the optical disk reproduction apparatus;
Fig. 52 shows an optical disk reproduction apparatus that does not have a function of discriminating a legal disk and an illegal disk;
Fig. 53 describes that input of an illegal encryption key is fed into to the optical disk reproduction apparatus from external;

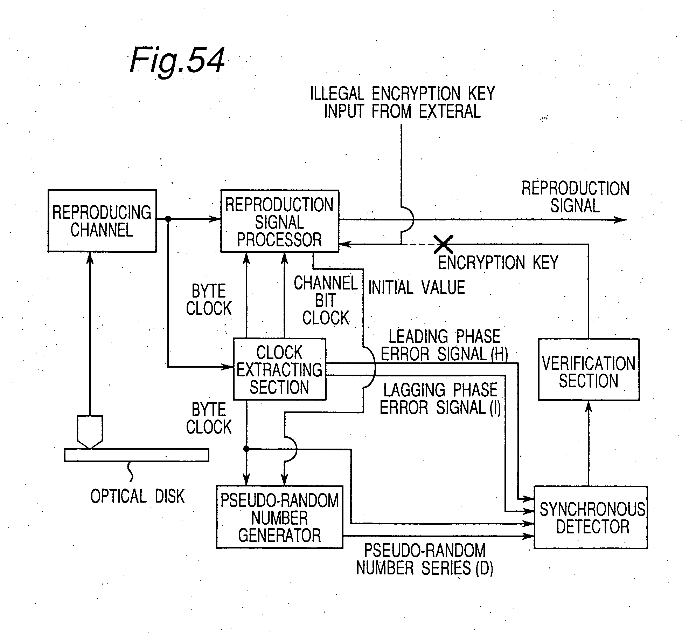

Fig. 54 shows the detailed configuration of an encryption encoder;
Fig. 55 shows an exemplary encryption method;
Fig. 56 describes an encryption key recorded as sub-digital data disposed to each ECC block;
Fig. 57 is a block diagram showing the detailed configuration of the encryption key reproduction circuit in an optical disk reproduction apparatus according to a fourth embodiment of the invention; and
Fig. 58 describes an encryption key recorded as sub-digital data disposed to each ECC block.

### Best Mode for Carrying Out the Invention

An optical disk and an optical disk recording and reproduction method according to preferred embodiments of the present invention are described below with reference to the accompanying figures.

### <Embodiment 1>

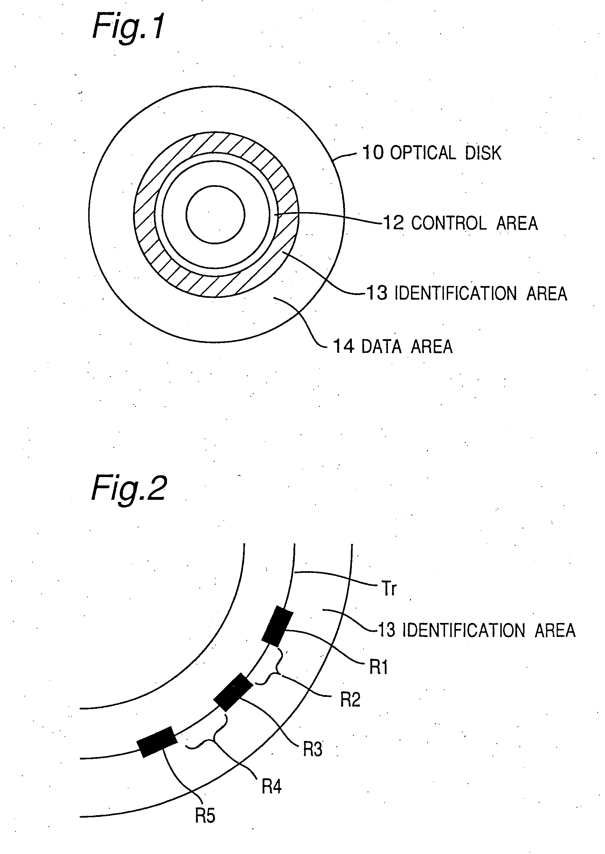

Fig. 1 shows the configuration of an optical disk according to a first preferred embodiment of the invention.

As shown in Fig. 1, the optical disk 10 has a control area 12 for storing control data, an identification area 13, and a data area 14 for storing contents.

A bit train is recorded to the identification area 13 at a timing of the reference clock which is locally phase modulated. This phase modulated bit train is detected as a high jitter component during reproduction. Disc identification data is superimposed to a time-based sequence of high and low jitter components by combining high jitter part and normal jitter part in the identification area 13.

Normal data having a bit train pattern irrespective of phase modulation of the clock is referred to as the "main digital data", and data that is obtained using the difference in the reproduction performance of bits that are phase modulated and bits that are not phase modulated is referred to as "sub-digital data" below. This sub-digital data is used as disk identification data in this embodiment of the invention, but it could be used for other data.

Fig. 2 is an enlarged view of the identification area 13 in Fig. 1. As shown in Fig. 2, track Tr has areas R2 and R4 recorded at the reference clock timing and areas R1, R3, R5 recorded at the phase modulated clock timing. A high jitter level is detected in areas R1, R3, R5 during reproduction.

The length of each area R1 to R5 can be variously determined. For example, the length of each area could be measured in sector units and equal to the length of one or more sectors. Alternately it can be measured in error correction block or track units and equal to one or more error correction blocks or tracks in length. More specifically, the length of each area only needs to be sufficient to enable a reproduction apparatus (player) to detect the difference in the jitter level.

By increasing the length of one area recorded at the phase modulated clock timing, the identification data can be correctly reproduced even if there is a scratch or other defect in the identification area. Similarly, increasing the length of one area recorded at the reference clock timing can also reduce the possibility of the area recorded at the reference clock timing being erroneously detected as the area where the identification data is recorded.

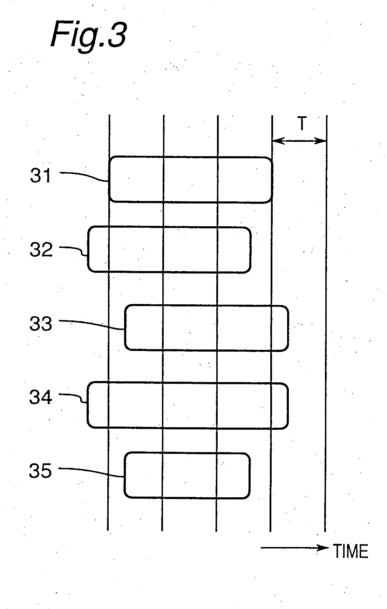

Furthermore, all pits in areas R1, R3, R5 can be recorded at the phase modulated clock timing, or only part of the pits could be recorded at the phase modulated clock timing. Fig. 3 shows an example of pits recorded at a phase modulated clock timing in which 3T signal is recorded. Fig..

Pits 31 to 35 in Fig. 3 are pits in a 3T signal, where T is a clock period and vertical lines represent a clock timing. Pit 31 is a pit recorded at the reference clock timing. Pit 32 is a pit recorded at a phase modulated clock timing so as to have both edges leading relative to the time base. Pit 33 is a pit recorded at a phase modulated clock timing so as to have both edges lagging relative to the time base. Pit 34 is a pit recorded at a phase modulated clock timing so as to have the leading start edge and the lagging end edge relative to the time base. Pit 35 is a pit recorded at a phase modulated clock timing so as to have the lagging start edge and the leading end edge relative to the time base.

Other phase modulation patterns are also possible, for example, pits could be recorded at a clock timing phase modulating only one edge. By thus recording at a partially phase modulated clock timing, jitter is increased in areas R1, R3, R5, and disk identification data corresponding to the amount of jitter in each area can be added. The actual phase error to be added is preferably set so that sufficient detection sensitivity can be achieved and reproduction signal errors are not increased. The amount of phase modulation that achieves this condition is believed to be from 1/8 to 1/4 of a clock cycle.

There are thus areas with locally high jitter in the identification area 13. Compared with other areas, these areas have a high possibility of not being able to be correctly reproduced. The identification area 13 is therefore used in the present embodiment as a dedicated area for determining whether the disk is an authorized disk. That is, by providing the identification area 13 separately to the control area 12 and data area 14, the data recorded in the control area 12 for reproducing the disk, and the content recorded in the data area 14 can be correctly played back.

Furthermore, by using the identification area 13 as a dedicated area, the disk manufacturer can configure the main digital data in the identification area 13 as desired to, for example, insert disk identification data into the main digital data. By combining identification data in the main digital data with identification data in the sub-digital data, it becomes necessary to accurately copy both sets of data when making an illegal copy, and thus makes production of illegal disks even more difficult.

When it is not necessary to insert other particular information in the main digital data written to the identification area 13, a pattern containing pits with a high jitter level such as the shortest mark and no pit interval can be recorded. This can reduce jitter in areas where the clock is not phase modulated, thereby increasing the dynamic range between the area where there is no phase modulation of the clock and areas where the clock is phase modulated, and reducing detection errors even when there is an overall drop in jitter as a result of soiling of the optical disk or reproduction head. It should be noted that this effect can also be achieved by not phase modulating the clock when forming pits with high jitter, such as the shortest marks, in a desired pattern.

It is also possible to record a pattern which contains a lot of synchronization patterns when it is not necessary to insert other particular information in the main digital data written to the identification area 13. This increases the margin of error to where PLL synchronization is lost, increases the area where phase modulation of the clock is possible, and makes it possible to accurately detect the sub-digital data.

It will be noted that while the identification area 13 is described in this embodiment as a dedicated area for disk identification, if the same main digital data is written repeatedly in the control area 12 and data area 14, or if the main digital data can be correctly reproduced even when jitter increases due to error correction, then the identification area 13 can be superimposed to the control area 12 or data area 14, or part of the identification area 13 can be superimposed to the control area 12 or data area 14. This makes it possible to increase the capacity of the data area 14.

It is also possible to determine whether the optical disk 10 is a legal disk or not based on information about the location of the identification area 13, that is, whether the identification area 13 is a dedicated area, or is in the control area 12, or is in the data area 14, or part of the identification area 13 is superimposed to the control area 12 or data area 14. For example, if part of the identification area 13 is superimposed to the control area 12, the disk can be determined to not be a legal disk if the sub-digital data cannot be detected from the control area 12 when the disk is played back.

The information about the location of the identification area on a legal disk could be recorded to a specific area of the optical disk 10, or could be stored in the reproduction apparatusapparatus. The information could be made obtainable over a network through a payment system. The information could be acquired through an IC card storing the necessary information and inserted into the reproduction apparatus..

If the information is obtainable through a payment system, the information could be tied to other data unique to the reproduction apparatus. If the information is combined with data unique to the reproduction apparatus and the same optical disk is then played back in a different reproduction apparatus, an additional fee can be collected from the different reproduction apparatus.

If the location information is stored to specific locations on the disk, the location information could be recorded to plural such locations. This assures that the data can be reliably obtained. Yet further, the location information could be recorded as the sub-digital data.

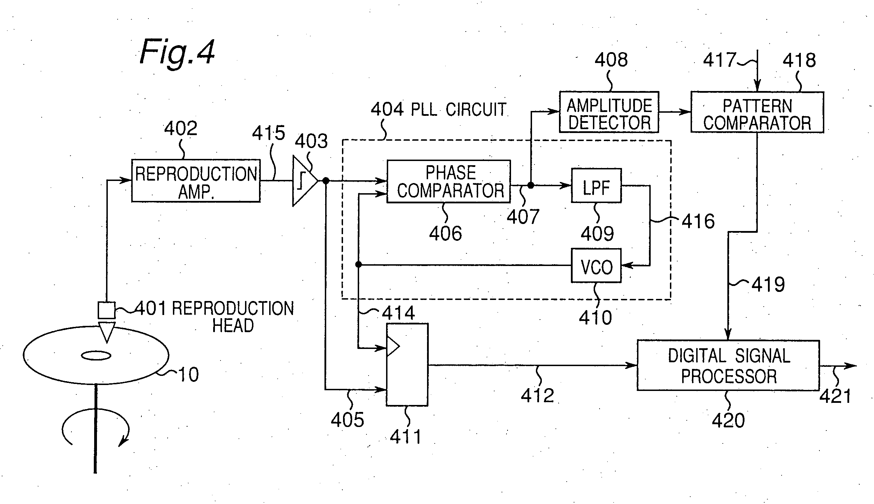

Fig. 4 is a block diagram of a reproduction apparatus for detecting the identification data recorded as sub-digital data to the identification area 13 and determining whether or not the disk is a legal disk. As shown in Fig. 4 this reproduction apparatus comprises a reproduction head 401, reproduction amplifier 402, digitizer 403, PLL circuit 404, phase comparator 406, amplitude detector 408, low-pass filter 409, voltage-controlled oscillator (VCO) 410, flip-flop 411, pattern comparator 418, and digital signal processor 420. The disk identification process is described next below.

The reproduction head 401 first reproduces or plays back the identification area 13 of the optical disk 10 according to the above described location information. The reproduction signal is then amplified by the reproduction amplifier 402, digitized by the digitizer 403, and the digital signal 405 is input to the PLL circuit 404. The PLL circuit 404 generates clock signal 414 form the signal 405. The flip-flop 411 synchronizes the signal 405 according to the timing of the clock signal 414 and inputs the resulting reproduction signal 412 to the digital signal processor 420.

The phase comparator 406 of the PLL circuit 404compares the phase of the clock signal 414 output from VCO 410 with the phase of the signal 405, and outputs a signal 407. The low-pass filter 409 limits bandwidth of the signal 407 and generates signal 416. The VCO 410 generates the reproduction clock signal 414 according to this signal 416.

If a variation of the signal 405 exceeds the tracking operation bandwidth of the PLL circuit 404, the clock signal 414 does not follow signal 405 variation and the PLL circuit 404 does not shift from the normal clock. Therefore phase error, that is, jitter, occurs between the clock and signal edge in signal 407 in the partially phase modulated areas R1, R3, R5.

The amplitude detector 408 rectifies, smoothens, and digitizes signal 407 to output signal 413. The identification data can then be recognized from the pattern of this signal 413.

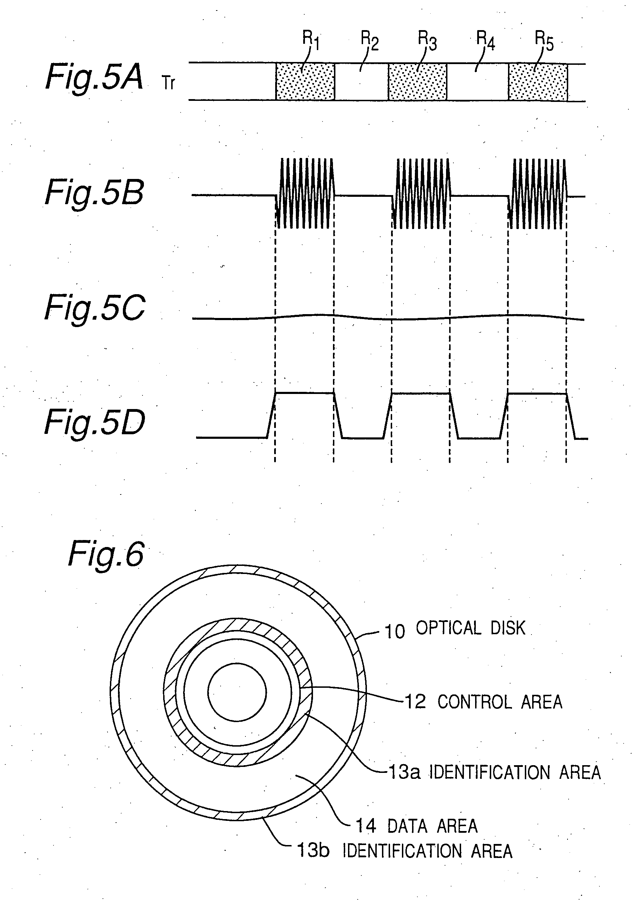

Fig. 5 is a timing chart of the various signals generated when reproducing areas R1 to R5 shown in Fig. 2. Fig. 5A shows the areas R1 to R5 in Fig. 2. Fig. 5B shows the signal 407 generated when each area is reproduced. Fig. 5C shows the signal 416. Fig. 5D shows the signal 413.

The pattern comparator 418 then compares the pattern of the signal 413 with the pattern of key data 417, and outputs the resulting signal 419 to the digital signal processor 420. This key data 417 is further described below. The digital signal processor 420 applies error corrects and demodulates reproduction signal 412, outputs a normal reproduction signal 421 if signal 413 and the key data 417 pattern match. If signal 413 and the key data 417 pattern do not match, signal reproduction is restricted by signal 419. It will be obvious that reproduction can be restricted in different ways, including, for example, prohibiting all signal reproduction, dropping the transfer rate so as to degrade image quality, or enabling intermittent reproduction.

Furthermore, if phase modulation advancing a pit edge to the time base such as in pit 32 and phase modulation delaying a pit edge to the time base such as in pit 33 as shown in Fig. 3 are equally applied, the average phase error will be 0 and PLL tracing of the pit edges which are recorded with phase modulation will be more difficult.

During normal data reproduction, the reproduction clock does not track reproduction signal variation due to phase modulation, and it is therefore possible to output a reproduction signal from which jitter has been removed as a result of the flip-flop 411 latching the signal 405 output from the digitizer 403. Likewise, when a disk is illegally copied using an apparatus such as shown in Fig. 13, the jitter that is used as the identification data is removed as a result of synchronization by the flip-flop 2007, the identification data is therefore lost, and it is possible to determine whether the copy is an illegal copy or not.

The key data 417 is described next. To determine whether a disk is an illegal copy, key data with a specific relationship to the identification data recorded by the clock phase modulation is recorded as normal binary data to the disk in the identification area 13 when the optical disk is manufactured. During reproduction, the key data is compared with the identification data detected from the fluctuation in jitter, and the disk is determined to be a legal copy only when a specific correlation is detected.

Assume, for example, that the key data 417 is a pattern of "10101", and that high and low levels in the signal 413 output from amplitude detector 408 are 1 and 0, respectively. Then, if when the identification area 13 of the optical disk 10 is reproduced the pattern starting from 1 is "10101", the key data and identification data match and the optical disk 10 is recognized as a legal copy.

Note that the key data for a legal copy could be recorded to a specific area of the optical disk 10, or it could be recorded in the reproduction apparatus, made obtainable over a network through a payment system. Further, the key data could be obtained through an IC card storing the necessary information that is inserted into the reproduction apparatus.

If the key data is obtainable through a payment system, the information could be tied to other data unique to the reproduction apparatus. If the data is combined with data unique to the reproduction apparatus and the same optical disk is then played back in a different reproduction apparatus, an additional fee can be collected from the different reproduction apparatus.

If the key data is stored to a specific area on the disk, the data could be recorded to plural locations. This assures that the data can be reliably obtained. Yet further, the key data could be recorded as the sub-digital data.

In this preferred embodiment of the invention, recording data to a specific disk area at a phase modulated clock timing produces a jitter difference between that specific disk area and disk areas recorded at the reference clock timing, and an identification data pattern is produced by imparting meaningful information to the time-base arrangement of different jitter levels in each area. The pattern length and configuration shall not be so limited, however, insofar as the identification data is constructed through recording at a phase modulated clock timing. For example, the identification data can be a simple pattern containing a high jitter level in one part only, or the pattern could have a specific pattern at the beginning indicating that the pattern is the identification data with the rest of the pattern filled with dummy data.

Yet further, while a reproduction apparatus as shown in Fig. 4 is used in this preferred embodiment to determine whether a played disk is a legal copy or not, a reproduction apparatus of a different configuration can be used insofar as the reproduction apparatus detects the jitter difference between an area recorded at a phase modulated clock timing and other areas recorded at the reference clock timing, extracts the recorded pattern, compares the pattern with the key data, and based on the comparison result determines whether the disk is an illegal copy or not.

For example, if it is possible to determine for each mark whether the mark was recorded at a phase modulated clock timing, then the number of marks recorded in an area at the phase modulated clock timing may be counted. The area can then be determined as "1" if the count exceeds a particular threshold value, and "0" if not. Alternatively, a specific gate signal could be provided, and the number of marks recorded with the phase modulated clock timing can be counted during the gate signal being high.

Yet further, if it is possible to determine whether the front and rear edges of each mark are recorded with the phase modulated clock timing, then the number of such edges in a particular area may be counted. The area can then be determined as "1" if the count exceeds a particular threshold value, and "0" if not. At that time, a specific gate signal could be provided, and the number of edges recorded with the phase modulated clock timing can be counted during the gate signal being high.

The determination process described above is further described below with reference to tables . When the data modulated in run length limited (2,10) modulation is recorded with mark edge recording method, there are marks and spaces ranging from a shortest length of 3T to a longest length of 11T where "T" is a reference period.

Table 1 is a table of phase modulated edges. "3S3M", for example, indicates phase modulation of the front edge of the 3T mark in a signal in which 3T mark follows 3T space. Likewise, "4M5S" indicates phase modulation at the rear edge of 4T mark in a signal in which 5T space follows 4T mark. It will be noted that for a table for marks and spaces longer than 6T is identical to the table for 6T. The marks and spaces are grouped into four groups in the table, respectively, but a different grouping could be used. It is also possible to generate tables of just marks or just spaces instead of a combination of marks and spaces.

**TABLE 1**

| | 3T Mark | 4T Mark | 5T Mark | 6T Mark |
|---|---|---|---|---|
| after 3T Space | 3S3M | 3S4M | 3S5M | 3S6M |
| after 4T Space | 4S3M | 4S4M | 4S5M | 4S6M |
| after 5T Space | 5S3M | 5S4M | 5S5M | 5S6M |
| after 6T Space | 6S3M | 6S4M | 6S5M | 6S5M |
| before 3T Space | 3M3S | 4M3S | 5M3S | 6M3S |
| before 4T Space | 3M4S | 4M4S | 5M4S | 6M4S |
| before 5T Space | 3M5S | 4M5S | 5M5S | 6M5S |
| before 6T Space | 3M6S | 4M6S | 5M6S | 6M6S |

Table 2 shows key data inserting threshold values to the values in Table 1. In this case the number of edges recorded at the phase modulated clock timing is counted in a specific area of the disk. The disk is determined to be authenticated, if, for example, the phase modulation (3S3M) count at the front edge of 3T marks in a signal where a 3T mark follows a 3T space is 10 or more, the phase modulation (5S6M) count at the front edge of a 6T or longer mark in a signal where a 6T or longer mark follows a 5T space is 20 or more, the phase modulation (4M5S) count to the rear edge of 4T marks in a signal where a 5T space follows a 4T mark is 30 or more, and the count at all other edges is less than 10.

**TABLE 2**

| | 3T Mark | 4T Mark | 5T Mark | 6T Mark |
|---|---|---|---|---|
| after 3T Space | 10 | 0 | 0 | 0 |
| after 4T Space | 0 | 0 | 0 | 0 |
| after 5T Space | 0 | 0 | 0 | 20 |
| after 6T Space | 0 | 0 | 0 | 0 |
| before 3T Space | 0 | 0 | 0 | 0 |
| before 4T Space | 0 | 0 | 0 | 0 |
| before 5T Space | 0 | 30 | 0 | 0 |
| before 6T Space | 0 | 0 | 0 | 0 |

It will be noted that the above explanation uses the tables as the key data for determining disk authentication, but the tables could alternatively be used as a specific gate signal. This is described with reference to Table 3.

In this case the phase modulation edges at the front edge of 3T marks in a signal where 3T mark follows 3T space are counted, the phase modulation edges at the front edge of 6T or longer marks in a signal in which 6T or longer mark follows a 5T space are counted, the phase modulation edges at the rear edge of 4T marks in a signal where 5T space follows 4T mark are counted, and the disk is determined to be authenticated as a legal copy if these counts are in a specific range.

**TABLE 3**

| | 3T Mark | 4T Mark | 5T Mark | 6T Mark |
|---|---|---|---|---|
| after 3T Space | 1 | 0 | 0 | 0 |
| after 4T Space | 0 | 0 | 0 | 0 |
| after 5T Space | 0 | 0 | 0 | 1 |
| after 6T Space | 0 | 0 | 0 | 0 |
| before 3T Space | 0 | 0 | 0 | 0 |
| before 4T Space | 0 | 0 | 0 | 0 |
| before 5T Space | 0 | 1 | 0 | 0 |
| before 6T Space | 0 | 0 | 0 | 0 |

It is also possible to descramble data which is scrambled using a table (such as Table 3) obtained by counting the edges recorded at the phase modulated clock timing in a specific disk area and assigning "1" when the count is 10 or higher, and assigning "0" when the count is less than 10.

It will be noted that how the tables for disk authentication and descrambling are used and compiled shall not be limited to those described herein.

If the phase lead or lag of each edge recorded at the phase modulated clock timing can be recognized to each edge, it is further alternatively possible to, for example, count the number of phase leading edges to determine "1" when the count exceeds a threshold value or "0" when the count does not exceed the threshold value. Alternatively, a gate signal could be provided so that when the gate is high the number of phase leading edges is counted, the number of phase lagging edges is counted when the gate is low. Then, "1" is detected when a sum of both counts exceeds a threshold value, and "0" is detected when the sum does not exceed the threshold value.

It will be further noted that there is only one area in identification area 13 where areas R1 to R5 are contiguous as shown in Fig. 2, but there can obviously be plural such areas. Providing plural such areas makes disk authentication possible when, for example, one such contiguous area is scratched and the identification data cannot be correctly detected from the area, by detecting the identification data from another contiguous area.

Likewise, while there is only one identification area 13 disposed at the inside circumference area of the disk in this embodiment, plural identification areas could be provided. Providing plural identification areas makes disk authentication possible whe for example, one area is scratched and the identification data cannot be correctly detected by detecting the identification data from another identification area.

As shown in Fig. 6, for example, if identification areas 13a and 13b are provided at the inside and outside circumference parts of the disk, whether the disk is a legal copy or not can be determined, even when one identification area is scratched, warped, or otherwise damaged and the identification data cannot be detected, by detecting the identification data from the other area.

Yet further, different identification data could be written to plural identification areas. In this case reproduction could be limited if all identification data or if more than a specific amount of identification data cannot be detected. Furthermore, providing multiple different identification data makes it even more difficult to design a device for manufacturing illegal copies, and thus further strengthens copyright protection.

It is also possible to record plural different identification data to a single identification area, and restrict reproduction if all or a specific amount of the identification data cannot be detected. Providing multiple different identification data in this manner also makes it more difficult to design a device for manufacturing illegal copies, and thus further strengthens copyright protection.

This embodiment detects the correlation between key data and identification data in an identification area to determine whether the disk is a legal copy and restrict reproduction if the disk is not a legal copy. It is alternatively possible, for example, to detect this correlation between key data and identification data in an identification area at regular time intervals, and disable reproduction if the expected correlation is no longer confirmed. In case of this correlation to be detected at regular time intervals, when plural identification areas are provided, the identification area nearest the reproduction data can be reproduced. It would therefore not be necessary to reproduce the previously reproduced identification area.

It is also not necessary to detect the correlation between the key data and identification data in the identification area before data reproduction or directly after reproduction begins. It is alternatively possible, for example, to detect this correlation at a specific period after content reproduction starts.

While this method allows a part of the content to be played back even from an illegal copy of a disk, this method still restricts reproduction after a specific period of time, thereby protecting the copyright of legal copies while also enabling a predetermined time to be used for presenting advertisement. In addition, when the key data is obtained through a payment system, for example, it is possible to provide system that allows a user to view part of the content from a legal copy while deciding whether to pay to view the remaining content.

When plural content titles are recorded to a single disk, identification data could alternatively be recorded separately for each title. In this case content for which the correlation between the key data and identification data is not detected could also be recorded to the disk.

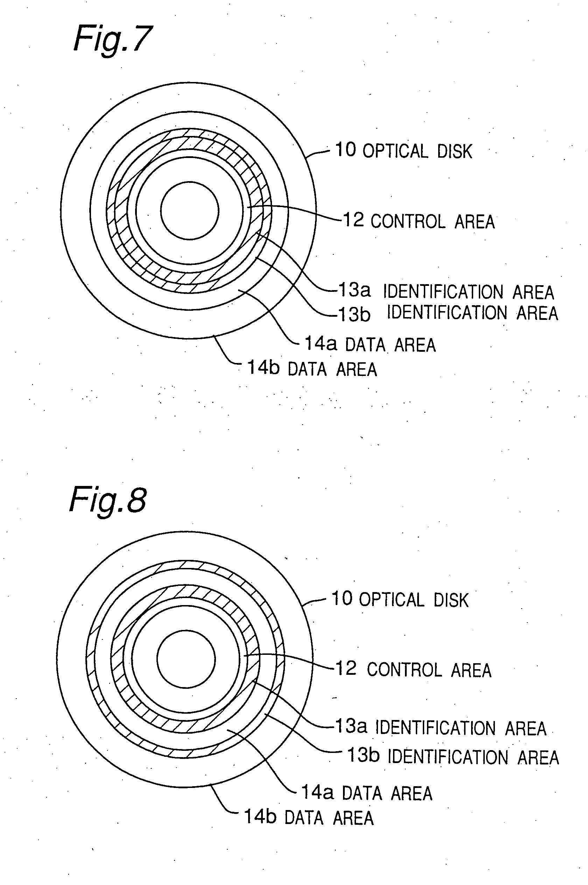

Placement of the identification area on a disk is further described with reference to Fig. 7 and Fig. 8.

Referring to Fig. 7, a first content title is recorded to data area 14a, and the corresponding identification data is recorded to identification area 13a. A second title is recorded to data area 14b and the corresponding identification data to identification are 13b. As described above, identification areas 13a and 13b can be dedicated areas, or can completely or partially overlap control area 12 or data areas 14a, 14b. As shown in Fig. 7, by locating the identification areas 13a, 13b at the inside circumference area, the identification areas can be reproduced after the control area is reproduced at startup, and data used to restrict reproduction of all disk content can be immediately obtained.

In Fig. 8 a first content title is recorded to data area 14a, and the corresponding identification data is recorded to identification area 13a. A second title is recorded to data area 14b and the corresponding identification data to identification area 13b. Identification areas 13a and 13b can be dedicated areas, or can completely or partially overlap control area 12 or data areas 14a, 14b. As shown in Fig. 8, by locating the identification areas 13a, 13b proximally to the corresponding data area 14a, 14b, the corresponding identification data can be detected immediately before the desired content is played back. It is therefore not necessary to detect or store unnecessary content identification data. The startup time and memory requirements can therefore be reduced.

This enables some content to be played back from an illegal disk copy, but protects the copyright of specific content.

When the key data for particular identification data is obtained from a payment system, it is also possible to provide a reproduction system to allow viewing of free content on an original disk before the user decides whether to view other individual content titles. In addition, the fee paid to obtain access to plural titles could also be set less than the fee paid to obtain access to each of the individual titles.

The identification areas could further alternatively be located at specific radial positions or specific address units rather than at a specific time interval so that when the identification area is passed, the correlation between the Key data and identification data in the identification area is detected and reproduction is restricted when then correlation is not confirmed. This technique strengthens copyright protection when there are multiple titles of short duration on the optical disk, or when the optical disk is manufactured to permit random access for games, for example.

Copyright protection using an identification area as described above shall not be limited to single layer disk media. Similar copyright protection can also be achieved in disk media having two or more reproduction layers by providing an identification area on each layer. Providing identification data for individual content titles is even more effective on multilayer disk media because the capacity of the multi-layer disk is even greater and even more content titles can be recorded to a single disk.

Copyright protection by means of an identification area as described above shall also not be limited to read-only disk media. Copyright protection will also be possible with recordable disk media by similarly providing identification area for a disk or a content.

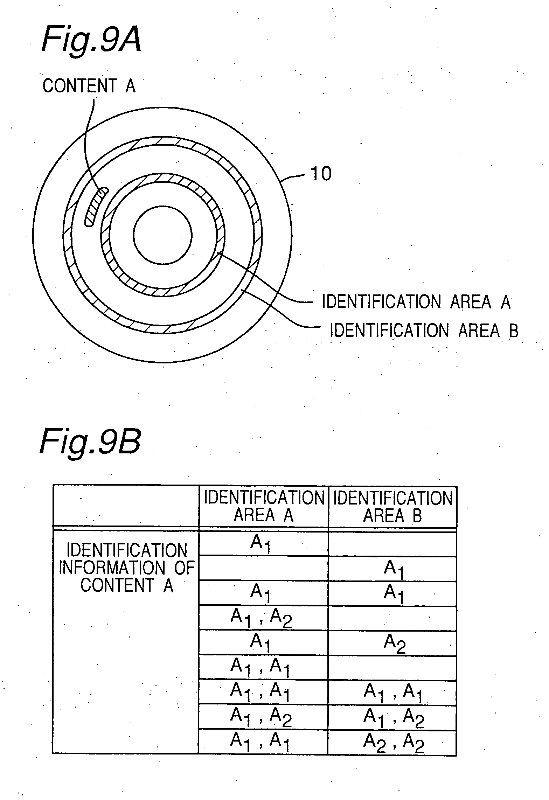

Fig. 9 shows an example of the relationship between content identification data and the identification areas where the identification data is recorded. As shown in Fig. 9A, when two identification areas comprising one identification area A and another identification area B are provided on a single disk, the identification data for content A is recorded to an identification area such as shown in Fig. 9B, for example.

For example, when identification data A1 is provided for content A, identification data A1 can be stored in either identification area A or identification area B as shown in Fig. 9B, or in both identification areas A and B. Further, identification data A1 could be recorded to plural areas (two in Fig. 9B) in identification area A.

Yet further, when plural identification data A1, A2 are provided for content A, both could be recorded to either one identification area (A or B), or to separate identification areas (one to A and the other to B). The same identification data could also be recorded to identification area A and identification area B.

It will thus be obvious that the identification data can be recorded in various ways to the identification areas.

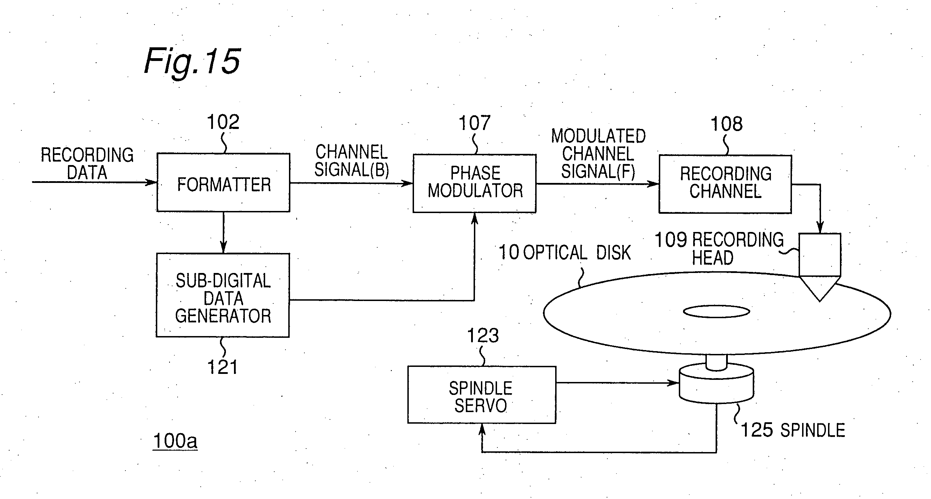

In this embodiment, the above description is made to an optical disk as an example of a recording medium, but the invention is not limited to the optical disk. The recording medium may include so-called CD-ROM, DVD-RCM, CD-R, CD-RW, DVD-RAM, DVD-RW, MO, and so on. That is, the invention can be applied to recording not only to asperity pits but also to phase change type film, magnetic film or the like. The reason is why the invention can be applied to other recording medium employing a recording method using not only dug pits but also phase change (transfer) or magnetization as long as pits (recording marks) can be written so that the pit positions are modulated by jitter. It should be noted that regarding a recording apparatus, the same configuration and operation of a recording apparatus shown in Fig. 15 can be applied to this embodiment.

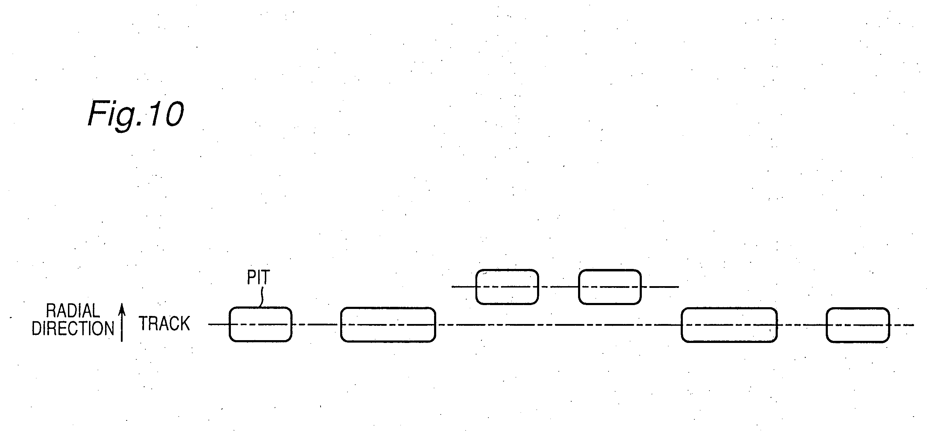

Pits recorded at a phase modulated clock timing is used as the identification data written to the identification areas in this embodiment of the invention as will be known from the above, but the method for generating the identification data shall not be so limited and other methods can be used. The identification data could, for example, be generated by modulation shifting the pits slightly in the radial direction as shown in Fig. 10. Furthermore, illegal copies can be prevented even more effectively by using plural superposing methods when recording the identification data.

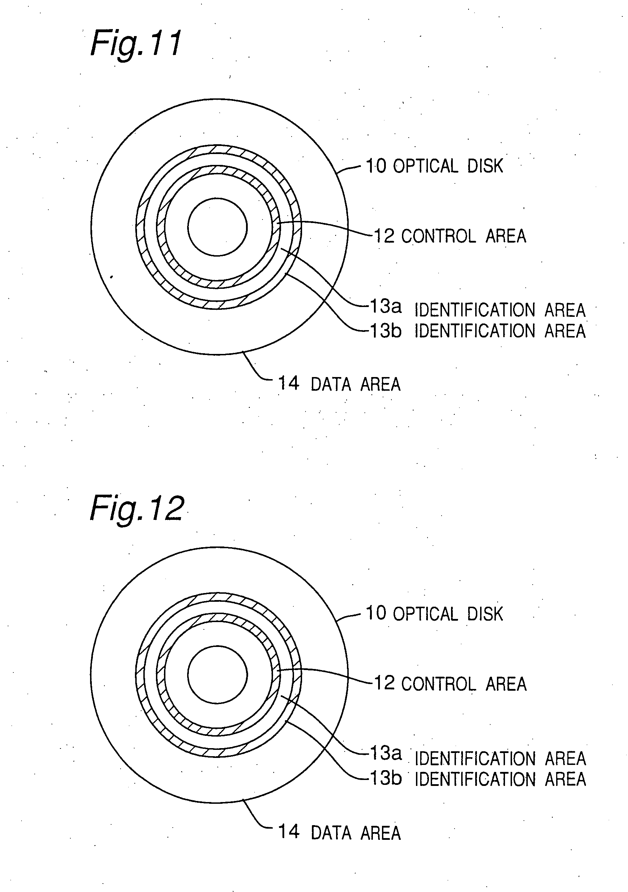

It should be noted that the present embodiment does not consider spinning the disk at different linear velocities. However, when increasing the linear velocity could degrade signal to noise (S/N) ratio, main digital data could not be reproduced correctly in an area where sub-digital data is superposed, and even the sub-digital data could not be reproduced due to a loss of PLL synchronization. It is therefore preferable for the identification area to be configured according to the linear velocity used for reproduction. An example of this is shown in Fig. 11.

In Fig. 11, identification area 13a is the identification area for reproducing data area 14 at a first linear velocity. Identification area 13b is the identification area for reproducing data area 14 at a second linear velocity. If the second linear velocity is faster than the first linear velocity in this case, phase error in identification area 13b will be less than phase error in identification area 13a, and the identification data can be correctly detected at either linear velocity.

By thus providing plural identification areas according to the linear velocity, the identification area can be detected without resuming a specific linear velocity even when the content is reproduced at various different linear velocities, and the time required for detection can thus be reduced. It will also be noted that fluctuation in the motor speed can be reduced by locating the identification area where the linear velocity is higher to the outside circumference part of the disk.

It will also be noted that the identification data recorded to an identification area can be a same identification data recorded at different linear velocities or different identification data recorded at each of different linear velocities. Illegal high speed reproduction can be prevented by changing the identification data according to the linear velocity used for reproduction. Furthermore, when the key data for the identification data is obtained from a payment system, the payment system can be set according to the linear velocity so that, for example, the payment at a high linear velocity is higher than the payment at a low linear velocity.

Plural identification areas are also preferably provided when differences in reproduction head performance are considered. An example of this is shown in Fig. 12. In Fig. 12 identification areas 13a, 13b use the same identification data, and the phase error when modulating the clock timing in phase differs. By thus providing plural identification areas with different phase error levels, the identification data can be correctly detected in one of the identification areas when reproduction head performance differs.

The data generated using pits recorded at a phase modulated clock timing is used as the disk or content identification data in this preferred embodiment, but the invention shall not be so limited and the same effect can be achieved when this data is used for other information relating to the disk or content.

The content can be correctly reproduced without increasing jitter during content reproduction in the present embodiment by forming the identification area separately to the area where content is recorded. In addition, the disk manufacturer can freely design the main digital data in the identification area so that, for example copyright protection can be strengthened by also inserting disk identification data in the main digital data.

Furthermore, by providing plural identification areas containing the same identification data for a single content title, the identification data can be more reliably detected by detecting it from a different identification area even when one identification area is scratched or damaged so that the identification data cannot be detected therefrom.

Furthermore, plural identification areas containing different identification data can be provided for a single content title, and thus production of illegal disk copies can be made even more difficult by providing

Yet further, different identification areas can be provided for different content titles, and thus individual copyrights can be protected.

### <Embodiment 2>

### (Optical disk recording apparatus)

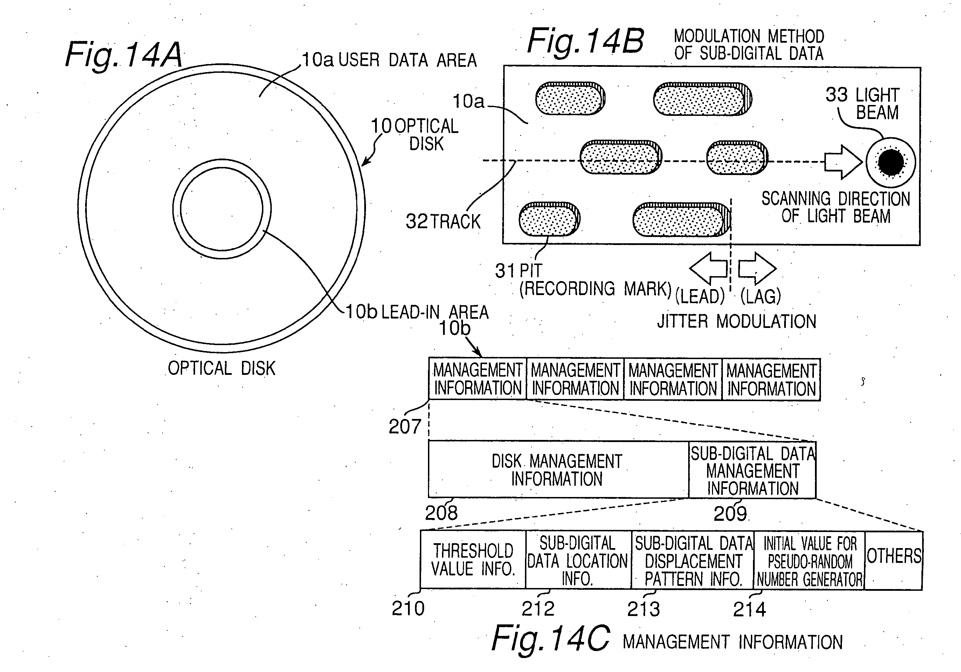

Fig. 14 shows the configuration of an optical disk (optical recording medium) according to a second embodiment of the present invention. As shown in Fig. 14A, the optical disk 10 has a user data area 10a and lead-in area 10b. Fig. 14B shows the modulation method for sub-digital data written to the data area. Fig. 14C shows the content of management information 207 written to the lead-in area. The management information 207 includes disk management information 208 and sub-digital data management information 209. The sub-digital data management information 209 includes threshold value data 210, sub-digital data location data 212, and sub-digital data displacement pattern data 213.

Operation is described next with reference to Fig. 14. Track 32 is formed in the master pattern production process of the disk manufacturing process by forming a continuous pit (31) sequence according to a specific modulation rule through laser cutting (exposure). The edges of the pits 31 lead or lag when cutting the pits 31 by displacing the laser spot a predetermined distance in the scanning direction while cutting a pit at a specific position or with a specific length.

Edge displacement is modulated to the extent that does not greatly affect the reproduction signal of the information represented by a particular bit, and allows bit to be detected by accumulating bit displacement. The signal thus embedded in the disk as jitter by slightly displacing pit edge positions is the sub-digital data. On the other hand, normally recorded data (main digital data) is recorded with the edge position information of the recorded marks at a regular interval. An optical disk having an illegal copy protection function according to the present invention has the sub-digital data management information required to read the sub-digital data pre-recorded to the disk, and a function for detecting this sub-digital data (secret key) and assuring copyright protection based on the detection result.

A method for manufacturing an optical disk according to the present invention is described next. Fig. 15 is a block diagram showing the major parts of an optical disk recording apparatus 100a according to the present invention.

This recording apparatus 100a is a system for recording optical disks such as DVD-ROM disks. In addition to recording the main digital content using the shape of optically readable recording marks, it has the ability to record a digital watermark (referred to herein as a secret key) as sub-digital data by phase-modulating the edges of the recording marks. As shown in Fig. 15, the recording apparatus 100a has a formatter 102, sub-digital data generator 121, phase modulator 107, recording channel 108, recording head 109, spindle servo 123, and spindle motor 125.

The formatter 102 is a control circuit for controlling modulation of the main digital data (recording marks), designating the sub-digital data, and recording the sub-digital data.

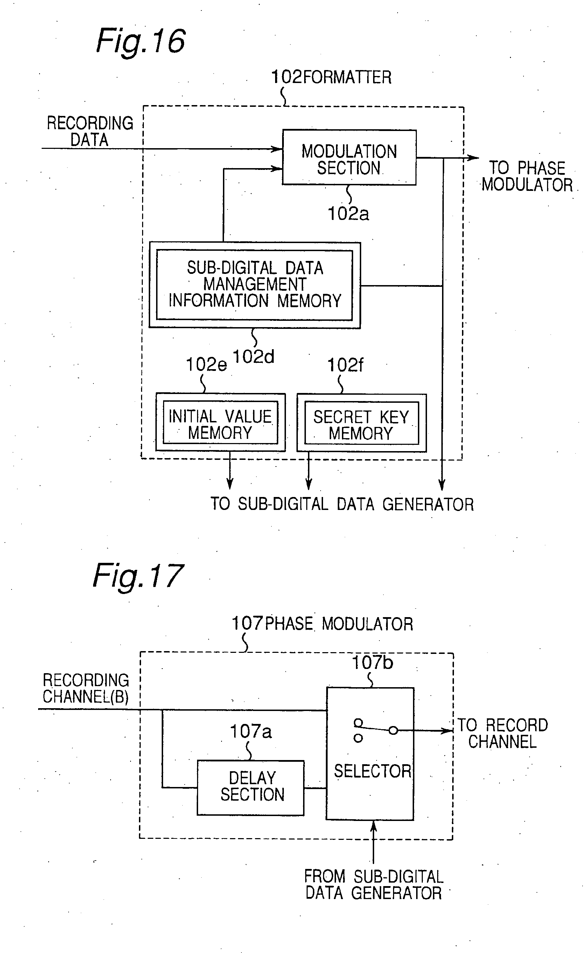

Fig. 16 is a block diagram showing the detailed configuration of the formatter 102. The formatter 102 has a modulator 102a, initial value memory 102e, secret key memory 102f, and sub-digital data management information memory 102d. The modulator 102a modulates the recording marks input to the recording apparatus 100a to a signal (channel signal B) appropriate to the optical disk 10. The initial value memory 102e confidentially prestores the initial value for a pseudo-random number series required for the sub-digital data generator 121 to generate the sub-digital data. The secret key memory 102f prestores the secret key. The sub-digital data management information memory 102d prestores management information such as the recording location information for the sub-digital data on the disk (for example, the sub-digital data location information, threshold value data, accumulated value data, sub-digital data displacement pattern information).

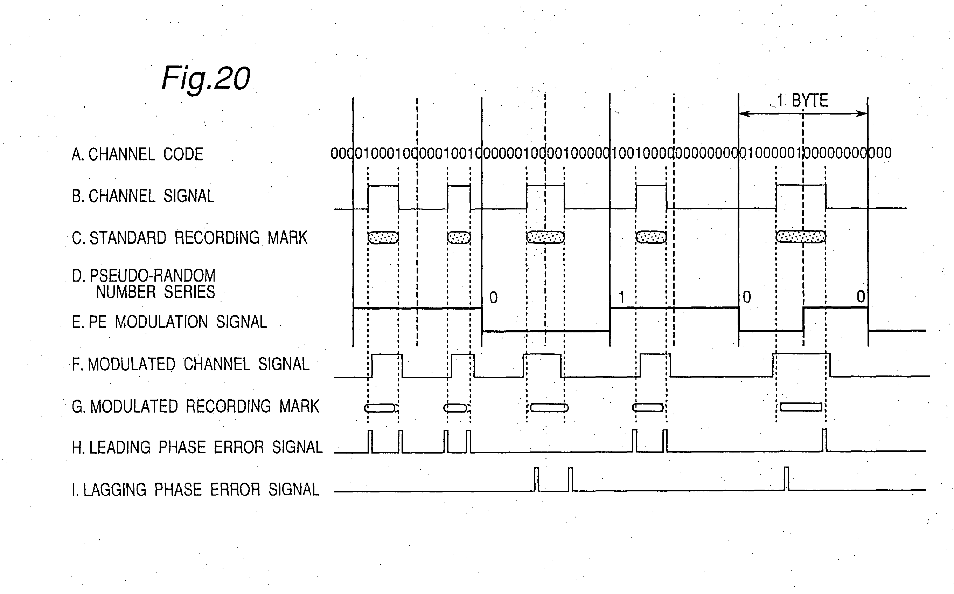

As shown in the timing chart in Fig. 20, the modulator 102a converts the input recording data in 8-bit symbol (byte) units to a corresponding 16-bit channel code A (8 to 16 modulation), then applies NRZI conversion to generate channel signal B, and outputs to the phase modulator 107.

The modulator 102a inputs the recording data as well as the sub-digital data management information. The modulator 102a thus generates channel signal B and outputs to the phase modulator 107.

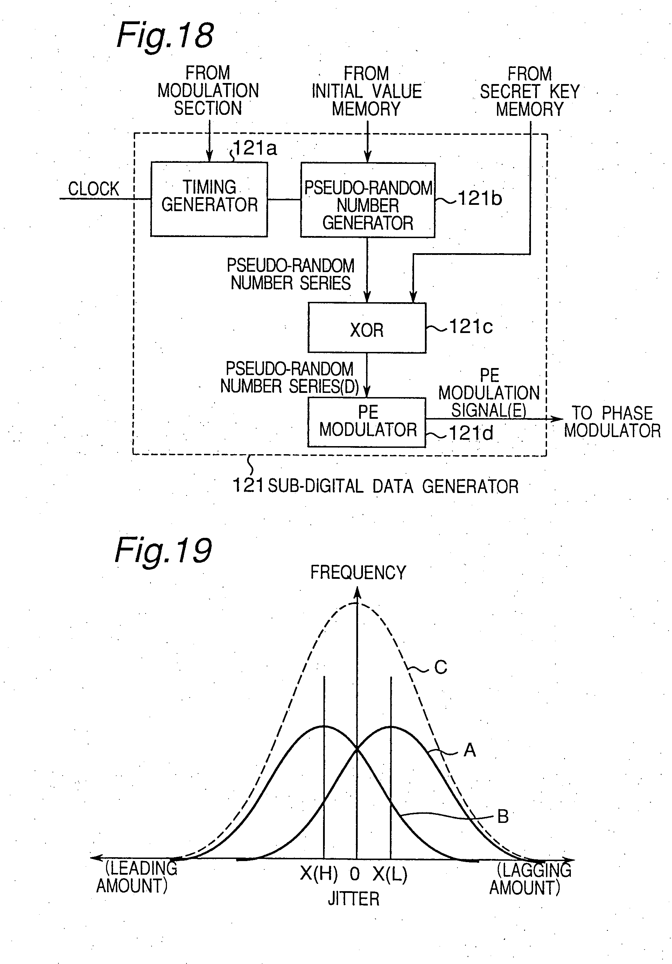

Fig. 18 is a block diagram showing the detailed configuration of a sub-digital data generator. When the modulator 102a receives a command from a controller (not shown in the figure) to start recording the secret key (such an operation is referred to below as "secret key recording mode"), it outputs a timing signal indicating the start of a byte to the timing generator 121a each time one byte of recording data is input.

When the secret key recording mode starts, the initial value memory 102e outputs the confidential 15-bit data (initial value) which is previously stored confidentially to the pseudo-random number generator 121b.

When the secret key recording mode starts, the secret key memory 102f outputs the confidentially previously stored 56-bit secret key to the XOR (exclusive OR gate) 121c in NRZ format one bit at a time from the LSB. The secret key memory 102f outputs the next-highest bit each time the modulator 102a modulates 256 bytes of recording data. In other words, the secret key memory 102f bit serially outputs a single 56-bit secret key to the XOR 121c as a secret key bit sequence corresponding to a total 256 x 56 bytes of recording data.

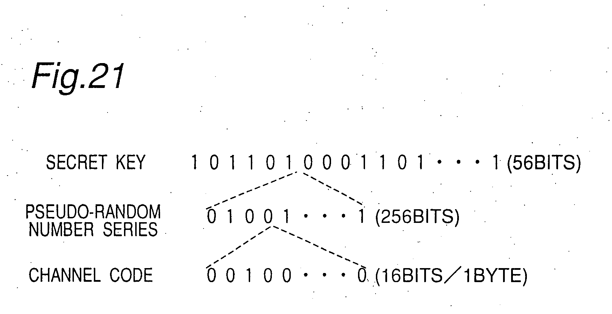

Fig. 21 shows the correlation between the secret key, pseudo-random number series, and recording data. In order to record a 56-bit secret key to optical disk as a digital watermark, a 256-bit pseudo-random number series is used for each bit of the secret key, and each bit of this pseudo-random number series is embedded in 1 byte of recording data (16-bit channel code). Note that each bit of this 56-bit secret key is used as a flag indicating whether or not the corresponding 256-bit pseudo-random number series is logically inverted as more fully described below.

The timing generator 121a (i) outputs a clock signal (byte clock) synchronized to each byte of the recording data based on the timing signal from the modulator to the pseudo-random number generator 121b, and (ii) based on this timing signal and a clock signal from a clock oscillator (not shown in the figure), outputs a timing signal indicative of the center (the point where the phase is 180 degrees) of channel signal B output from the formatter 102 to the pseudo-random number generator 121b.

The pseudo-random number generator 121b generates a pseudo-random number series (M series) with a 2¹⁵ bit sequence per cycle using the initial value from the initial value memory 102e as a preset value and the byte clock from the timing generator 121a as a shift clock.

It should be noted that in this embodiment the pseudo-random number generator 121b is used to generate the pseudo-random number series embedded to the total 256 x 56 byte recording data, that is, a 256 x 56 bit pseudo-random number series, in the secret key recording mode.

XOR 121c performs the exclusive OR operation from the pseudo-random number series from pseudo-random number generator 121b and the bit sequence from the secret key memory 102f, and outputs the resulting pseudo-random number series D to the PE modulator 121d. In other words, the XOR 121c selectively inputs the pseudo-random number series generated for each bit of the 56-bit secret key directly to the PE modulator 121d, or logically inverts and then inputs it to the PE modulator 121d.

Based on the timing signal from the timing generator 121a, the PE modulator 121d PE-converts the pseudo-random number series D from XOR 121c, and outputs the resulting PE modulation signal E to phase modulator 107. As a result, as shown in the timing chart in Fig. 20, PE modulation signal E falls in the middle of channel signal B when pseudo-random number series D from XOR 121c is 0, rises when pseudo-random number series D is 1, and inverts again at the channel signal edge when the same random value repeats.

Based on the PE modulation signal E from PE modulator 121d, phase modulator 107 phase modulates an edge of channel signal B from the formatter to delay or advance a short constant time, and outputs the resulting modulated channel signal F to the recording channel 108. Note that this short time is preset to half value (σ/2) of the standard deviation σof the frequency distribution of jitter observed when this phase modulator is bypassed (the sub-digital data is not recorded) and a normal optical disk recording only the main digital data is played back on a normal disk reader.

Fig. 17 is a block diagram showing the detailed configuration of the phase modulator 107. The phase modulator 107 has a delay 107a for delaying the input signal by the above short time, and a 2-input, 1-output selector 107b. When the gate signal input as the control signal is 1, the selector 107b passes channel signal B input directly from the formatter 102. When the gate signal is 0, the selector 107b passes the channel signal input by way of the delay 107a.

As a result, the phase of the rising and falling edges of channel signal B input to the phase modulator 107 are (in a relative time relationship) advanced the above-noted short time when the gate signal is 1 (0 to 180 degrees) and delayed the short time when the gate signal is 0 (180 to 360 degrees). In other words, channel signal B input to the phase modulator 107 is jitter modulated based on the output of the sub-digital data generator and converted to modulated channel signal F.

The recording channel produces a control signal switching the laser beam emitted to the optical disk on/off synchronized to input/output of the modulated channel signal F from the phase modulator 107, and sends the control signal to the recording head 109. Based on the control signal generated from the recording channel, the recording head 109 cuts the recording marks into a spiral pattern on the surface of the rotating optical disk 10 by emitting a light beam while switching the laser beam on and off. As a result, modulated recording marks consisting of optically readable pits and lands are formed in the optical disk.

Fig. 14B shows the recording surface of an optical disk on which pits are formed by the recording head. The two edges in the scanning direction of the light spot of a pit recording sub-digital data are formed with the phase advanced (or delayed) by displacement equivalent to the constant short time relative to the edge positions formed when the sub-digital data is not recorded.

Fig. 19 is a graph showing the frequency distribution of jitter observed for pits formed when recording the sub-digital data, that is, modulated recording marks recorded with jitter modulation.

Curve A shows the jitter distribution for only the edges of modulated recording marks generated when the gate signal is 0, and is a near-Guassian distribution in which the highest frequency is the position X(L) where the phase is shifted in the delay or lagging direction by the displacement. Curve B shows the jitter distribution for only the edges of modulated recording marks generated when the gate signal is 1, and is a near-Gaussian distribution in which the highest frequency is the position X(H) where the phase is shifted in the advance or leading direction by the displacement. Curve C shows the overall jitter distribution for the combined curves A and B.

The present invention uses the ability to separate the jitter distribution of curve C into curves A and B by synchronous detection using the same pseudo-random number series as that for recording the secret key.

### (Sub-digital Data Management Information)

The sub-digital data management information used for managing the above described sub-digital data is described next.

Sub-digital data management information refers to the information needed to read (extract) the sub-digital data. This includes, for example, (1) location on the disk where the sub-digital data is embedded (sub-digital data location data), (2) threshold value data needed to read the sub-digital data, (3) initial value for the pseudo-random number generator, and (4) gate information for reading sub-digital data (the sub-digital data displacement pattern). The sub-digital data management information is placed on a specific location on the disk. These locations include (A) the lead-in area or lead-out area, (B) BCA (Burst Cutting Area), and (C) the user data area.

Recording the sub-digital data management information to the lead-in area (case (A) above) is described next with reference to Fig. 14. The sub-digital data is recorded with jitter modulation to the user data area 10a of optical disk 10. The physical format of the optical disk, logical format, scrambling information, region code, and other information is recorded to the lead-in area 10b at the inside circumference part of the disk. Combination of the lead-in area 10b and the management data area (such as the TOC area of a CD) can always be checked when the disk is loaded.

Data needed to interpret the sub-digital data can be read immediately when the disk is loaded by pre-recording the sub-digital data management information 209 separately to the disk management information 208 in the management information written to the lead-in area 10b.

The sub-digital data management information 209 includes the threshold value data 210, sub-digital data location information 212, sub-digital data displacement pattern 213, and initial value data 214 for the pseudo-random number generator.

The sub-digital data location information 212 records the radial position, sector, or zone where the sub-digital data is recorded on the disk. The threshold value information 210 and initial value 214 are required for optical disk drive to reproduce (extract) the sub-digital data.

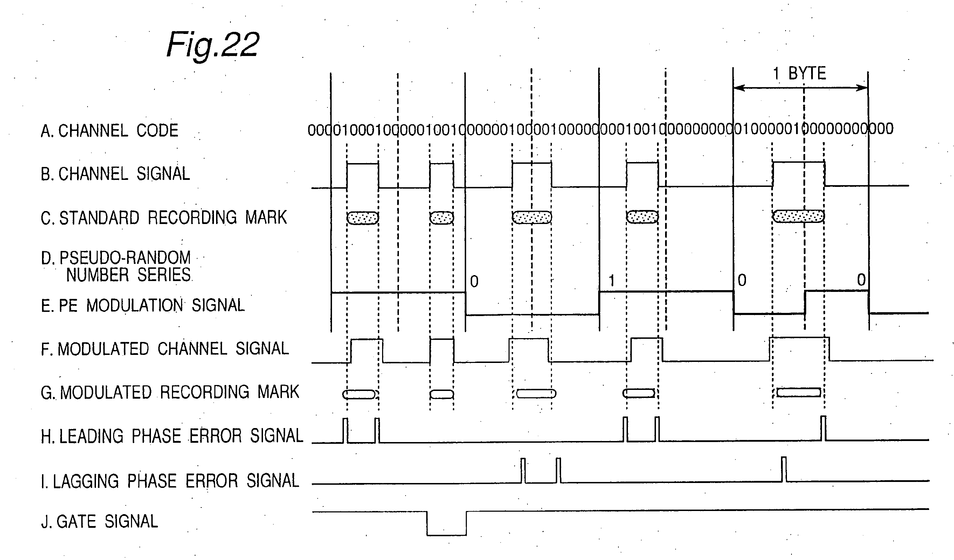

The sub-digital data displacement pattern 213 is described more fully with reference to Fig. 22. Channel code A is modulated by PE-modulation signal E and recorded as modulated recording marks G. However, gate signal J is produced by the sub-digital data displacement pattern. The modulated marks are modulated and recorded when gate signal J is high, but the modulated signal is unmodulated and recorded when gate signal J is low. Note that jitter modulation turns on/off according to the gate signal.

The sub-digital data displacement pattern determines whether jitter modulation is on or off. For example, to record a 3T mark with (8-16) modulation, jitter modulation is turned off, but jitter modulation is on when recording marks in other runs.

In 8-16 modulation, 3T mark is the shortest run, and provides the recording/reproduction signal with the worst S/N ratio. Therefore, when recording a 3T mark, by turning jitter modulation off, signal quality of a 3T mark in the main digital data will not be degraded. In addition, since the sub-digital data is not embedded, detection errors when detecting the sub-digital data can be reduced.

Registered may be a sub-digital data displacement pattern that removes jitter modulation in 3T and similarly short marks and spaces that are most greatly affected by heat interference and inter symbol interference. Thus it is possible to reproduce (extract) sub-digital data with good reliability when reading the sub-digital data.

When the content of the sub-digital data management information is divided to plural areas for different content titles on the optical disk, the sub-digital data and sub-digital data management information can be divided and stored to each of the areas. Furthermore, while the sub-digital data management information is recorded to the lead-in area in this embodiment, it can obviously be stored to the lead-out area.

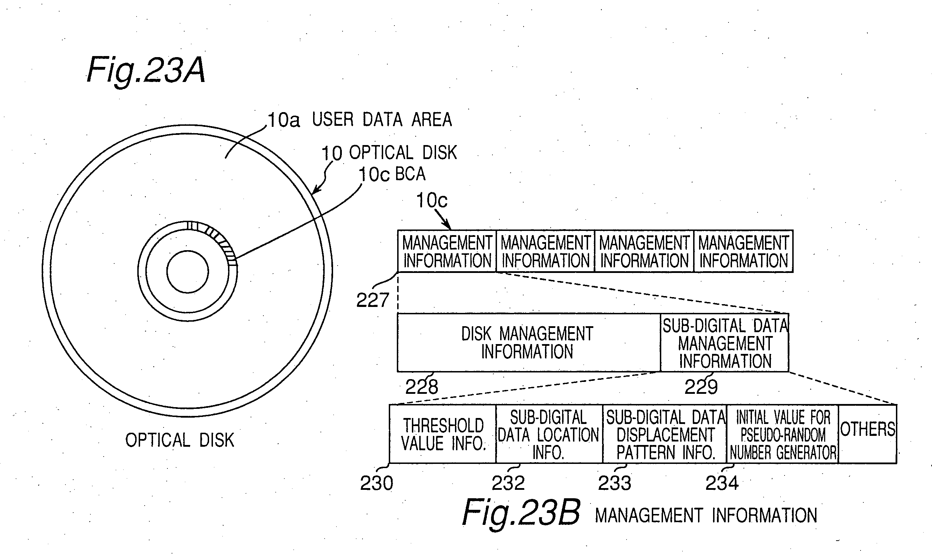

Yet further, the sub-digital data management information can be recorded as a BCA (Burst Cutting Area). Recording the sub-digital data management information as a BCA (case (B) above) is described next with reference to Fig. 23.

Fig. 23A shows an optical disk in which the sub-digital data management information is recorded to a BCA. Note that the BCA is found in a specific area at the inside circumference part of the optical disk 10.

The BCA 10c is added as code written with a YAG laser or other high power laser after the disk production process is completed. The code is written in a striped pattern in an inside to outside circumference direction as shown in Fig. 23A, and reflectance is lower in the formed parts.

The sub-digital data management information is recorded to the BCA in the same manner as it is added to the conventional disk management information.

The information needed to interpret the sub-digital data can be read quickly in this case, because the BCA is read when the disk is loaded like the lead-in area.

Yet further, while the sub-digital data management information can be recorded to the lead-in area or BCA as described above, it can alternatively be recorded to a dedicated area in the user data area.

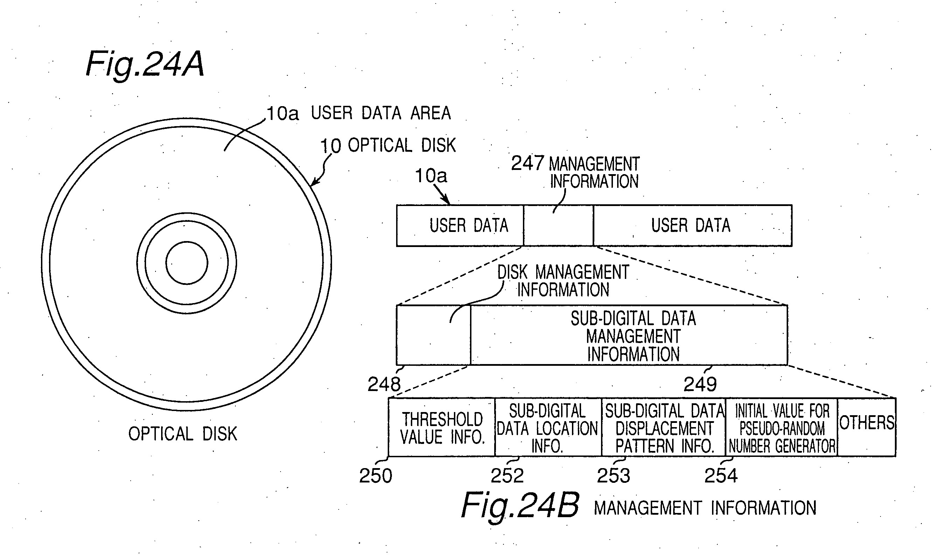

Recording the sub-digital data management information to the user data area (case (C) above) is described next with reference to Fig. 24.

Fig. 24 is a schematic diagram of an optical disk in which the sub-digital data management information is recorded to the user data area. The user data area 10a of the optical disk 10 stores both user data and management information. Management information 247 recording the sub-digital data management information is written to a specific area disposed between user data and user data. The management information 247 comprises disk management information 248 and sub-digital data management information 249. Note that the disk management information 248 can be omitted.

The sub-digital data management information 249 includes threshold value information 250, sub-digital data location information 252, the sub-digital data displacement pattern 253, and the initial value 254 for the pseudo-random number generator. The sub-digital data location information 252 records the radial position, sector, or zone where the sub-digital data is recorded on the disk. The threshold value information 250 and initial value 254 are required for optical disk drive to reproduce (extract) the sub-digital data.

In order to identify that the sub-digital data management information 249 is at a specific location in the user data area, information indicative of the radial position, recording zone, or other position on disk where the sub-digital data management information is located is written to the lead-in area, lead-out area, or BCA. Further alternatively, the sub-digital data management information 249 can be written to a predetermined constant radial position or zone. In this case the optical disk reproduction drive stores the disk location of the sub-digital data management information in nonvolatile memory.

The security of the sub-digital data can be improved by placing the sub-digital data management information 249 in the user data area. It is also possible to distribute the sub-digital data management information 249 to plural locations in the user data area.

The copyright of individual content titles can be more easily assured by, for example, recording the sub-digital data management information separately for each zone or title. The user data area also offers the advantage of being able to store numerous sub-digital data management information entries because the storage capacity of the user data area is significantly greater than that of the lead-in area, lead-out area, or BCA.

### (Optical Disk Reproduction Apparatus)

A system for playing back an optical disk recording a secret key as described above is described next below.

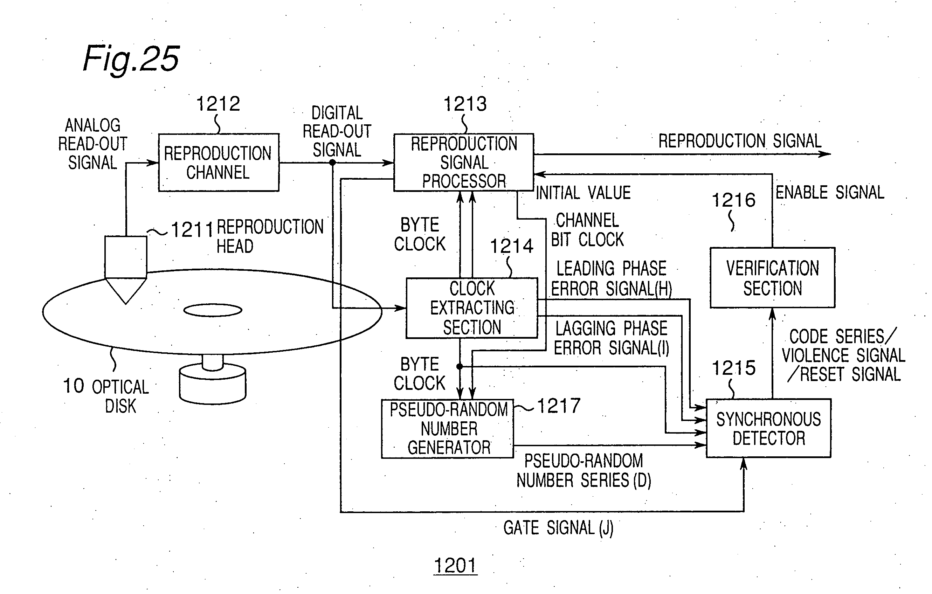

Fig. 25 is a block diagram showing the major parts of an optical disk reproduction apparatus 1201 according to the present invention. Note that the waveforms of the main signals H and I shown in Fig. 25 are the same as shown in the timing chart in Fig. 20.

This reproduction apparatus 1201 is an optical disk reproduction apparatus corresponding to the recording apparatus 100a described above. In addition to reproducing the main digital data based on the locations of the recording marks on the optical disk, the reproduction apparatus 1201 also has a function for detecting the sub-digital data (secret key) embedded in the recording mark jitter observed during data reproduction, and protecting the copyright of the main digital data based on the detected secret key. The reproduction apparatus 1201 has a reproduction head 1211, reproduction channel 1212, reproduction signal processor 1213, clock extracting section 1214, synchronous detector 1215, verification section 1216, and pseudo-random number generator 1217.

The reproduction head 1211 is an optical pickup. It emits a focused light beam on the recording marks on the spinning optical disk, generates an analog read signal indicating the edge positions of the modulated recording marks G, and outputs to reproduction channel 1212. The reproduction channel 1212 converts the analog read signal from the reproduction head 1211 to a digital read signal, and outputs to the reproduction signal processor 1213 and clock extracting section 1214.

Based on the read signal from the reproduction channel 1212, the clock extracting section 1214 extracts and generates four clock signals, that is, (i) a channel bit clock synchronized to the bits of the channel code, (ii) an leading phase error signal H indicating the leading component of the read signal referenced to the channel bit clock, (iii) a lagging phase error signal I similarly indicating the lagging component, and (iv) a byte clock synchronized to the (byte unit) recording data in the read signal. These four clock signals are fed into (i) the reproduction signal processor 1213, (ii) the synchronous detector 1215, (iii) the synchronous detector 1215, and (iv) the reproduction signal processor 1213, synchronous detector 1215, and pseudo-random number generator 1217, respectively.

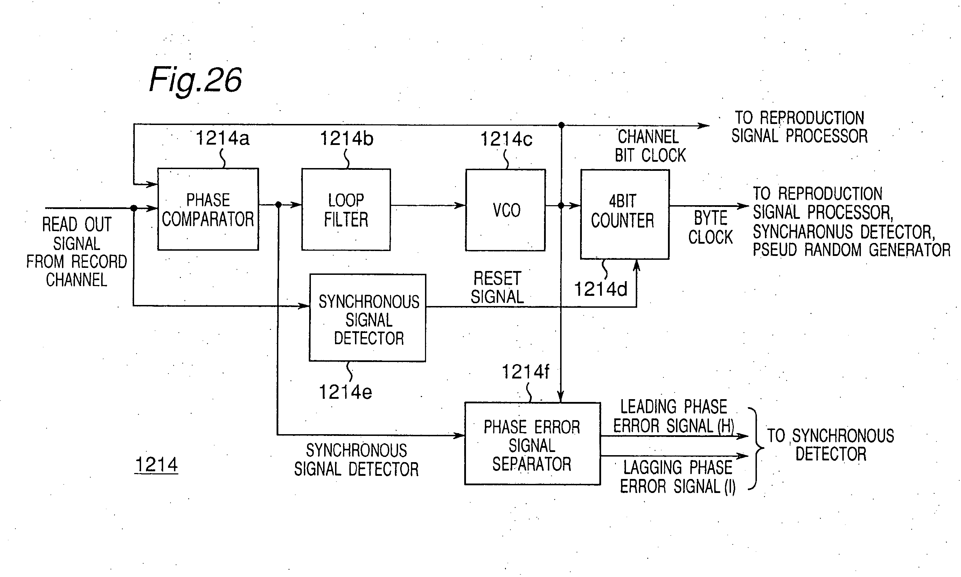

Fig. 26 is a block diagram showing the detailed configuration of the clock extracting section 1214. The clock extracting section 1214 comprises a PLL circuit, a 4-bit counter 1214d, a synchronization signal detector 1214e, and a phase error signal separator 1214f. The PLL circuit comprises a phase comparator 1214a, loop filter 1214b, and VCO (Voltage Controlled Oscillator) 1214c.

The phase comparator 1214a includes a counter, exclusive OR gate, flip-flop, or the like. Based on the channel bit clock input as feedback from the VCO 1214c and read signal from the reproduction channel 1212, the phase comparator 1214a calculates the phase errors between the rising and falling edges of the read signal and the rising edge of the channel bit clock closest to the read signal edges. The calculation result is output as the phase error signal to the loop filter 1214b and phase error signal separator 1214f.

The loop filter 1214b is a low-pass filter that smoothens the phase error signal from the phase comparator 1214a and converts it to a dc voltage signal. The VCO 1214c is a voltage controlled oscillator that generates a channel bit clock of a frequency corresponding to the voltage signal from the loop filter 1214b.

The synchronization signal detector 1214e detects the synchronization pattern contained in the read signal, and outputs it as a reset signal to the 4-bit counter 1214d. The 4-bit counter 1214d is a counter that applies 1/16-frequency division to the channel bit clock from VCO 1214c, and is reset by the reset signal from synchronization signal detector 1214e. That is, 4-bit counter 1214d outputs a byte clock synchronized to the recording data (byte unit) in the read signal.

The phase error signal separator 1214f separates the phase error signal from phase comparator 1214a into the leading phase error signal H and lagging phase error signal I, and outputs to the synchronous detector 1215.

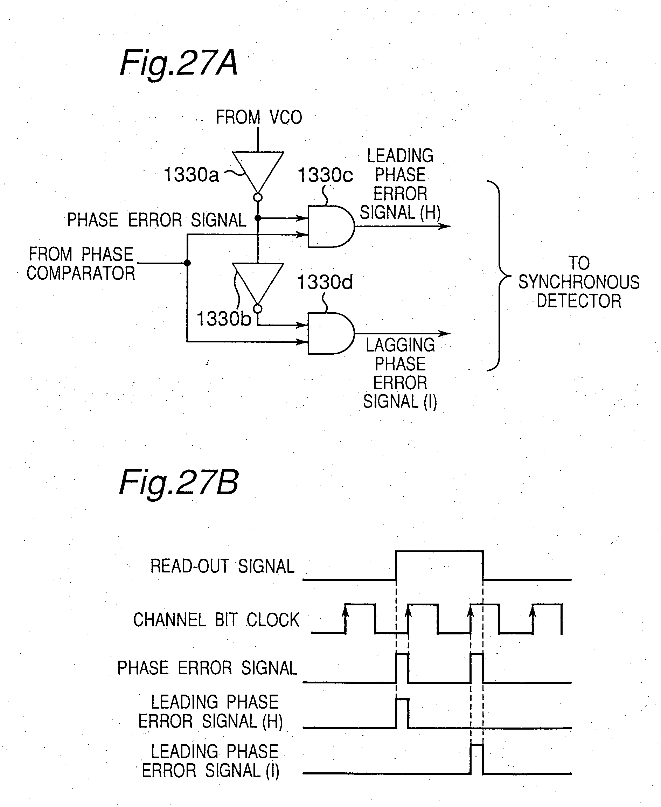

Fig. 27A is a schematic circuit diagram showing the detailed configuration of the phase error signal separator 1214f. The phase error signal separator 1214f comprises two inverters 1330a, 1330b, and two AND gates 1330c and 1330d. Fig. 27B is a timing chart of signals used to describe the operation of the phase error signal separator 1214f shown in Fig. 27A. As shown in Fig. 27B, a leading phase error component and a lagging phase error component are included in the phase error signal output from phase comparator 1214a. Since these phase error signals H and I are separated synchronized to the channel bit clock, the signal (leading phase error signal H) waveform output from AND gate 1330c shows only the leading phase error signal component, and the signal (lagging phase error signal I) waveform output from AND gate 1330d shows only the lagging phase error signal component.

The reproduction signal processor 1213 demodulates the read signal from reproduction channel 1212, performs a control for sub-digital data detection, and operates to provide copyright protection based on the detection result.

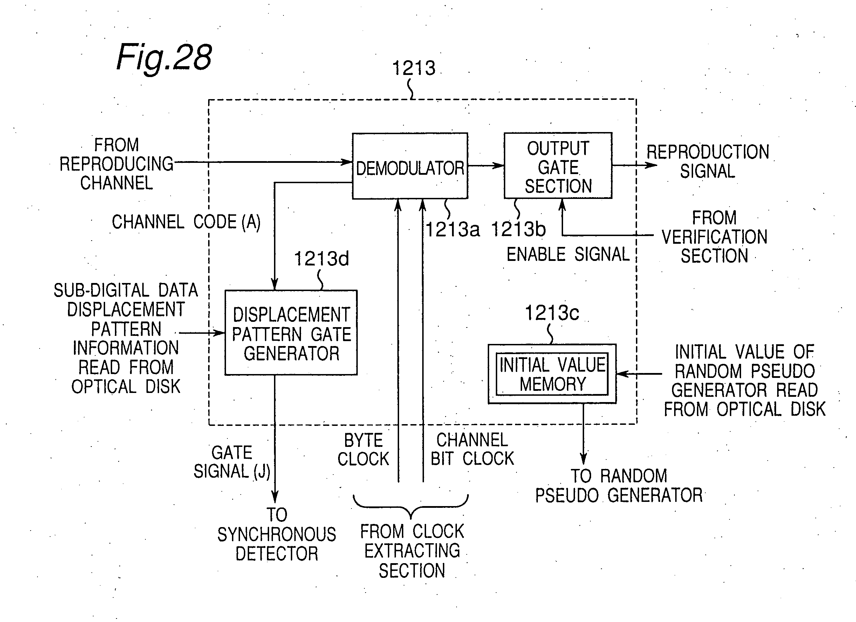

Fig. 28 is a block diagram showing the detailed configuration of the reproduction signal processor 1213. The reproduction signal processor 1213 comprises a demodulator 1213a, output gate 1213b, initial value memory 1213c, and displacement pattern gate generator 1213d.

The demodulator 1213a is a demodulation circuit corresponding to the modulator 102a of the recording apparatus 100a. The demodulator 1213a samples the read signal from the reproduction channel 1212 synchronized to the channel bit clock from clock extracting section 1214 to demodulate to channel code A. Subsequently, the demodulator 1213a converts (16-8 modulation) the channel code A to 8-bit recording data corresponding to each channel code synchronized to the byte clock from the clock extracting section 1214, and outputs the recording data stream to the output gate 1213b.

The output gate 1213b is a buffer gate for copyright protection. The output gate 1213b externally passes the recording data stream from demodulator 1213a as a reproduction signal only while an enable signal (notifying that it has been confirmed that a valid secret key is recorded to the optical disk) from verification section 1216 is input.

The initial value memory 1213c is a register for storing the initial value 214 of the pseudo-random number generator read from the sub-digital data management information 209 (a 15-bit initial value). When a signal indicating the start of secret key reading (referred to below as "secret key reading mode") is received from a controller (not shown in the figure), the initial value memory 1213c outputs the initial value to the pseudo-random number generator 1217.

Based on the result of reading the sub-digital data displacement pattern 213 in the sub-digital data management information 209 on the optical disk 10, the displacement pattern gate generator 1213d generates the gate signal according to the length of specific marks and spaces in the data stream of channel code A demodulated from the demodulator 1213a.

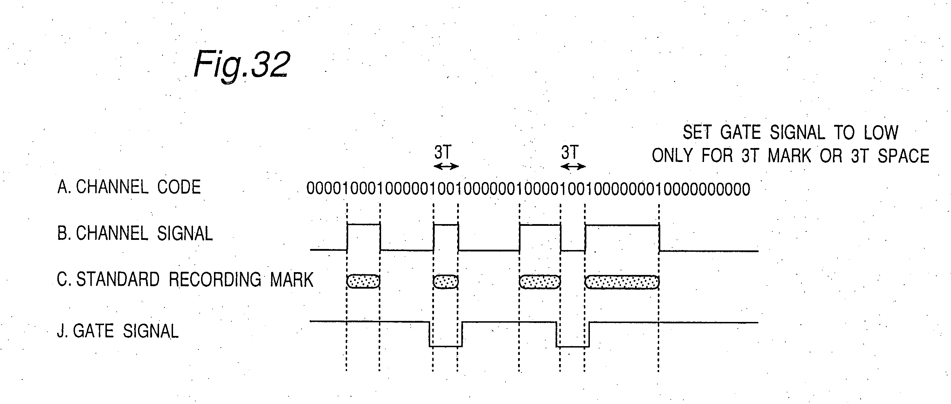

Fig. 32 is a timing chart of the displacement pattern gate. A case in which a 3T run is distinguished from 4T and longer runs in 8-16 modulation is described next with reference to Fig. 32.

As shown in Fig. 32, gate signal J outputs low when runlength of the channel code A is 3T, and outputs high when the runlength is 4T or longer. It should be noted that while this example describes differentiating a 3T from a 4T or longer run, it will be similarly possible to differentiate 4T and shorter runlengths from 5T and longer runs, 5T and shorter runlengths from 6T and longer runs, and so forth. This information is written to the sub-digital data displacement pattern.

The pseudo-random number generator 1217 has the same function as the pseudo-random number generator 121b of the optical disk reproducing apparatus 100a. Using as a preset value the initial value from the initial value memory 102e which stores the initial value read from the pseudo-random number generator initial value 214 written to the optical disk and using as a shift clock the byte clock input from clock extracting section 1214, the pseudo-random number generator 1217 generates a pseudo-random number series (M series) with a 2¹⁵ bit sequence per cycle. The pseudo-random number generator 1217 in the disk reader 1201 is used to generate a 256 x 56 bit pseudo-random number series.

The synchronous detector 1215 detects the correlation between the pseudo-random number series from pseudo-random number generator 1217, and the leading and lagging phase error signals H and I output from clock extracting section 1214, and outputs the result (positive correlation, negative correlation, no correlation) for each pseudo-random number (1 bit) to the verification section 1216.

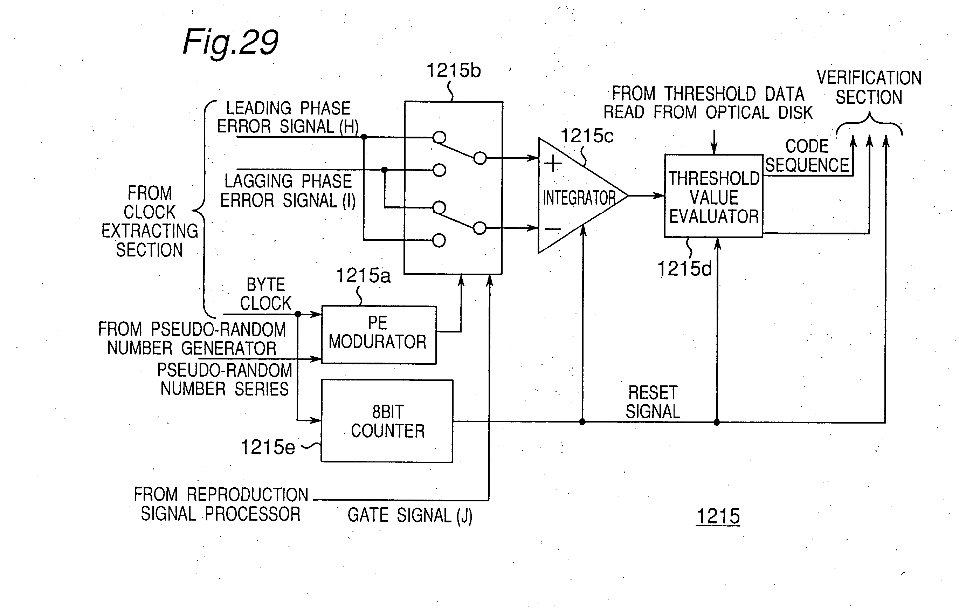

Fig. 29 shows the detailed configuration of the synchronous detector 1215. The synchronous detector 1215 comprises PE modulator 1215a, selector 1215b, integrator 1215c, threshold value evaluator 1215d, and 8-bit counter 1215e.

The PE modulator 1215a has functions relating to the timing generator 121a and PE modulator 121d of the optical disk reproducing apparatus 100a. Based on the byte clock from the clock extracting section 1214, the PE modulator 1215a applies PE modulation to the pseudo-random number series from pseudo-random number generator 1217, and outputs the result as a selection control signal to the selector 1215b. That is, PE modulator 1215a applies PE modulation to the pseudo-random number series from the pseudo-random number generator 1217, and outputs the result as a selection control signal to the selector 1215b. More specifically, PE modulator 1215a outputs to selector 1215b a signal wave which falls down at the middle of each recording data byte in the reproduced read signal when the pseudo-random number from the pseudo-random number generator 1217 is 0, which rises up when the pseudo-random number is 1, and which inverts again at the border of each recording data byte when the same pseudo-random number repeats.

The selector 1215b has two 2-input, 1-output selectors. When the control signal from the PE modulator 1215a is 1, the selector 1215b passes the leading phase error signal H and lagging phase error signal from the clock extracting section 1214 to the positive and negative input terminals of the integrator 1215c, respectively; when the control signal is 0, it passes signals H and I crossed to the negative and positive input terminals of the integrator 1215c, respectively.

The 8-bit counter 1215e is a counter to apply 1/256 frequency divisionto the byte clock from the clock extracting section 1214. It outputs the result as a reset signal to the integrator 1215c, threshold value evaluator 1215d, and verification section 1216. This reset signal thus outputs one reset pulse each time the pseudo-random number generator 1217 outputs a 256-bit random number series.

The integrator 1215c is an analog integrator having a differential input and a bipolar output. The integrator 1215c sums the area of pulses input to the positive input terminal to store, subtracts the area of pulses input to the negative input terminal to store, and outputs an analog signal corresponding to the total stored area to threshold value evaluator 1215d. If the reset signal is applied from the 8-bit counter during this time, the integrator 1215c restarts from zero.

As a result, while the PE modulated signal from PE modulator 1215a is 1, the output wave from integrator 1215c indicates the total accumulated area of the additively accumulated area of the pulses in the leading phase error signal H and the subtractively accumulated area of the pulses in the lagging phase error signal I. When the PE modulated signal is 0, the output wave indicates the total accumulated area of the subtractively accumulated area of the pulses in the leading phase error signal H and the additively accumulated area of the pulses in the lagging phase error signal I.

Accordingly, the output wave of the integrator 1215c is therefore a ramp wave with a positive slope when a positive correlation continues in which pulses appear only in the leading phase error signal H when the PE modulated signal goes to 1 and pulses appear only in the lagging phase error signal I when the PE modulated signal goes to 0. Conversely, when a negative correlation continues in which pulses appear only in the lagging phase error signal I when the PE modulated signal goes to 1 and pulses appear only in the leading phase error signal H when the PE modulated signal goes to 0, the output wave from the integrator 1215c is a ramp wave with a negative slope. When neither a positive or negative correlation exists, that is, when pulses appear randomly in the leading phase error signal H and lagging phase error signal I irrespective of the PE modulated signal, the output wave from the integrator 1215c is held approximately at a zero level because the frequency of both pulses in these error signals is substantially equal.

The threshold value evaluator 1215d is a comparator or other device for determining in which of three voltage ranges the analog signal from the integrator 1215c is located. These voltage ranges are defined by the preset positive threshold voltage and negative threshold voltage read from the sub-digital data management information on the optical disk.

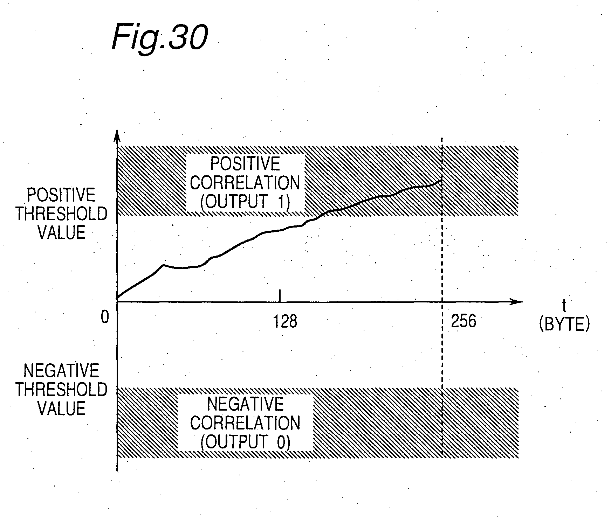

Fig. 30 describes the operation of the threshold value evaluator 1215d, and shows the analog signal wave input from integrator 1215c to the threshold value evaluator 1215d. At the point (more specifically, immediately before) the reset signal is applied from the 8-bit counter 1215e, the threshold value evaluator 1215d (i) outputs to the verification section 1216 an NRZ format symbol stream that goes 1 when the signal voltage from integrator 1215c is greater than the positive threshold value and goes 0 when less than the negative threshold value. The threshold value evaluator 1215d, (ii) when the signal voltage from integrator 1215c is between these threshold values, sends a violence signal indicating that status to the verification section 1216.

The threshold value is set so that, when jitter modulation according to the present invention is applied, output voltage of the integrator 1215c exceeds reliably (that is, with an extremely high probability) the threshold voltage, but the output voltage does not exceed the threshold value (with an extremely low probability) when the jitter modulation is not applied. The specific value is determined according to, for example, jitter modulation during recording (delay of delay circuit in the phase modulator), the number of bytes (256) input to the integrator 1215c, the average edge count per byte, or the standard deviation in a natural (randomly occurring) jitter distribution.

The code series output from the threshold value evaluator 1215d thus shows the change in the polarity (positive or negative) of the correlation observed at each 256-bit pseudo-random number. This polarity change is information corresponding to a bit sequence indicating whether the pseudo-random number series, was recorded by jitter modulation without logic inversion or was recorded after logic inversion for each 256-bit pseudo-random number series.

The verification section 1216 certifies whether the optical disk currently being read was recorded by a legal optical disk reproducing apparatus 100a based on the symbol stream and the violence signal from the synchronous detector 1215. Only when the result is affirmative, the verification section 1216 sends an enable signal indicating that status to the reproduction signal processor 1213.

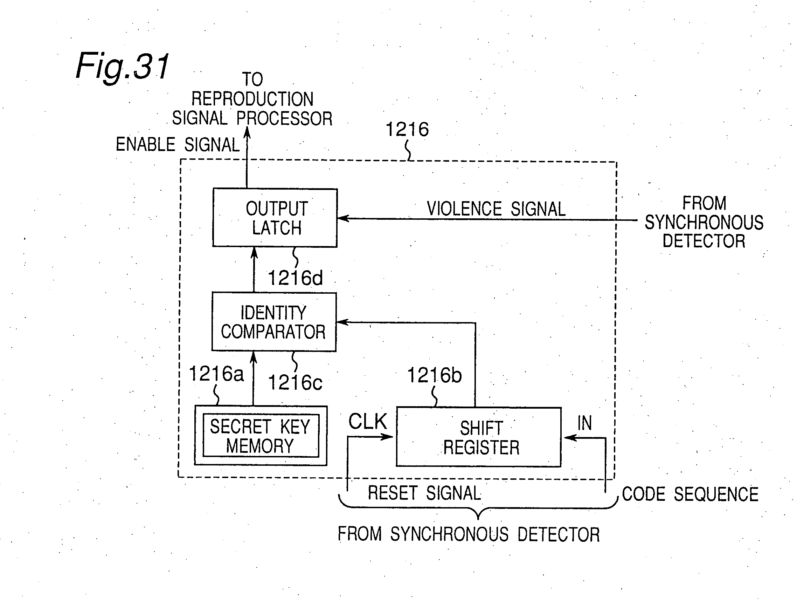

Fig. 31 is a block diagram showing the detailed configuration of the verification section 1216. The verification section 1216 comprises a secret key memory 1216a, shift register 1216b, identity comparator 1216c, and output latch 1216d.

The secret key memory 1216a is a register for prestoring the same 56-bit secret key as the secret key memory 102f of the optical disk reproducing apparatus 100a. The shift register 1216b is a 56-stages (bits) shift register for shifting and storing the code series from the synchronous detector 1215 using the reset signal from clock extracting section 1214 as a shift clock.

Immediately after the 56-bit code series is input to the shift register 1216b, the identity comparator 1216c determines whether the symbol sequence perfectly matches the 56-bit secret key stored in the secret key memory 1216a to pass the result to the output latch 1216d.

The output latch 1216d outputs an enable signal to the reproduction signal processor 1213 only when the violence signal is not received from the synchronous detector 1215 and a perfect key match is reported by the identity comparator 1216c. That is, the verification section 1216 outputs an enable signal to the reproduction signal processor 1213 only when it is confirmed that a positive or negative correlation exists consecutively 56 times (for a 256 x 56 bit pseudo-random number series) between the 256-bit pseudo-random number series input from the pseudo-random number generator 1217 to the synchronous detector 1215 and the phase error signal contained in the read signal, and there is a perfect match between the polarity change of the correlation and the 56-bit secret key stored to the secret key memory 1216a.

At the moment the secret key reading mode ends, when an enable signal is output from the verification section 1216 to the reproduction signal processor 1213, the reproduction signal processor 1213 determines that the processed disk is a medium having a secret key embedded by a legal optical disk reproducing apparatus 100a. The reproduction signal processor 1213 then externally outputs the reproduction signal obtained by demodulating the read signal from the reproduction channel 1212. If an enable signal is not output from the verification section 1216 to the reproduction signal processor 1213, the optical disk is determined to not be a medium having a secret key embedded by a legal optical disk reproducing apparatus 100a, and the reproduction signal processor 1213 does not externally output the reproduction signal, thereby protecting the copyright.

It is therefore possible to prevent illegally reading recording data from an optical disk for which an embedded secret key cannot be confirmed. As a result, even if a new optical disk is produced by making a dead copy of a legal optical disk containing a secret key, playing back the optical disk by this disk reader 1201 is prohibited unless the secret key embedded by jitter modulation is also copied, and the copyright can therefore be protected.

A recording medium storing jitter modulated data and a recording and reproduction apparatus for this recording medium are described above according to a preferred embodiment of the present invention, but it will be obvious that the invention shall not be so limited.

For example, a 256 x 56 bit pseudo-random number series logically inverted according to a single 56-bit secret key is embedded in this embodiment to a consecutive 56 bytes of recording data. The invention shall not, however, be limited to these numbers. It is also possible, for example, to embed a plurality of pseudo-random number series starting from one, two, or more kinds of initial values in a plurality of areas to recording data in a specific disk area or number of bytes related to the ECC block, sector, frame, or other physical recording structure.

Furthermore, the condition for confirming that an optical disk is a legal copy in this embodiment is that a positive or negative correlation is present 56 consecutive times between the phase error signal and pseudo-random number series every 256 bytes, but this could be reduced to 50 or more of 56 times. As shown in Fig. 19, because the jitter distribution has a certain spread, there are cases in which it is preferrable to evaluate a meaningful relationship based on an evaluation standard with a tolerance determined by the pulse count or jitter modulation used for the evaluation.

Yet further, this embodiment restricts reproduction of the main digital data when the coincidence between the secret key and the code series output from the synchronous detector is less than or equal to a specified value. However, it is also possible to simply compare the phase error signal integrated by the synchronous detector with a specified threshold value rather than use the secret key, determine a strong correlation to the pseudo-random number series when the threshold value is exceeded, and thereby restrict reproduction. Copyright protection to some extent can thus be achieved using a simpler configuration.

Yet further, the present embodiment evaluates the correlation by analogically integrating the pulse area of the leading phase error signal H and lagging phase error signal I during synchronous detection of the phase error signal. To simplify the circuitry, however, this can be replaced with a digital technique of simply counting while adding and subtracting the pulse counts.

The jitter modulation of the present invention applied to recording data written to the user data area 10a of the optical disk can be applied to the lead-in area, lead-out area, and BCA. It can also be combined with content encryption according to the prior art. For example, by applying jitter modulation according to the present invention when recording the disk key and title keys stored to the control data area, copyright protection against illegal copies produced by pirate manufacturers, for example, can be strengthened without changing the content (digital data) recorded with conventional content encryption.

Yet further, the disk drive 1201 of this embodiment outputs the demodulated reproduction signal only when the presence of an embedded secret key on the optical disk is verified, but the invention shall not be limited to using the verification result in this way. For example, if the validity of the optical disk cannot be confirmed, the verification result could be used to permit reproduction of only title data recorded to a specific area of the optical disk.

Yet further, the secret key used as the sub-digital data is stored in this embodiment to both the optical disk reproducing apparatus 100a [200, sic] and disk reader 1201, but it is also possible to overwrite the secret key by means of a user command or secure communication with an external device. Alternatively, it could be pre-recorded encrypted to the disk as sub-digital data management information, for example.

The present embodiment has been described using an optical disk recording medium by way of example, but the present invention shall not be so limited and can be applied to CD-ROM, DVD-ROM, CD-R, CD-RW, DVD-RAM, DVD-RW, magneto-optical and other such media. That is, the invention can be applied to the disk which records data on not only asperity pits but also phase change film or magnetic film. Insofar as the pit (recording mark) position can be written with jitter modulation, the invention can be applied to a media using various recording methods other than pit-and-land formation including phase transition (phase change) and magnetization. It should be noted that the reproducing apparatus shown in Fig. 15 can be used to this embodiment in configuration and operation.

Jitter modulation according to the present invention is used to hide sub-digital data embedded to an optical disk, but the present invention shall not be limited to such concealment applications. It could be used, for example, to applications in which different types of digital data can be recorded so as to be reproduced them separately , thereby improving the recording density in non-encrypted applications. An example of such application is superimposing audio information (sub-digital data) to video information (main digital data) for writing to a recording medium.

Sub-digital data is thus embedded to the main digital data in an optical disk according to this embodiment of the invention in a way that makes the sub-digital data difficult to read. The sub-digital data is therefore not copied when an optical disk is copied simply on the basis of recording mark presence, making it possible to differentiate between the source disk that was copied and the resulting copy thereof. This makes it possible to prevent copyright infringement by simply making a direct copy of digital copyrighted material on an optical disk.

Furthermore, by pre-recording the sub-digital data management information to the optical disk, a different master key can be easily assigned to each disk so that even if one key is exposed it will have no effect on other drives.

It is yet further possible to assign the sub-digital data management information so that the location information for the threshold value information and sub-digital data is different in each disk, and the security of this information can be yet further enhanced by then encrypting the sub-digital data containing common threshold information or the location information of the sub-digital data.

The initial value for the random number series of the sub-digital data can also be pre-recorded to the optical disk as sub-digital data management information. This makes it possible to change the initial value for the random number series for each disk, and thus yet further improves data security. Security can also be improved without affecting copyright protection of other disks by changing the pseudo-random number series, even when a single secret key is used for multiple disks.

When the lead or lag of the recording marks for a random number series of specific length is accumulated and the sub-digital data is generated based on whether the accumulated value is greater or less than a predetermined threshold value, the threshold value can be pre-recorded as the sub-digital data management information. It is therefore possible to improve data security by changing the threshold value by disk. In addition, when a single secret key is used on multiple disks, data security can be improved without affecting copyright protection of other disks by changing the threshold value.

The sub-digital data location information can alternatively be pre-recorded as the sub-digital data management information. Data security can therefore be improved by freely changing by disk the location of the sub-digital data on the disk. Furthermore, when one secret key is used on multiple disks, data security can be improved without affecting copyright protection of other disks by changing the location of the sub-digital data.

The sub-digital data can also be recorded while switching phase modulation on and off according to the recording mark length. This can be used to prevent phase modulation from degrading the signal quality of recording marks of a length producing a low S/N ratio in the reproduction signal. In addition, detection errors of the sub-digital data can be reduced and the sub-digital data can be reliably reproduced (extracted) because the sub-digital data is not embedded in recording marks of a length having a poor S/N ratio.

The recording mark length information determining the phase modulation on/off state can be pre-recorded as the sub-digital data management information. The length of the phase modulated recording marks can therefore be freely changed by disk, and data security can be improved. Furthermore, when one secret key is used on multiple disks, data security can be improved without affecting copyright protection of other disks by changing the recording mark length determining whether phase modulation is on or off.

The sub-digital data management information can be pre-recorded to the control data area of the optical disk. The sub-digital data management information can therefore be read when the disk is loaded, and the sub-digital data can be quickly extracted.

In addition, the sub-digital data management information can be pre-recorded to the user data area of the optical disk. This makes it possible to distribute the sub-digital data and corresponding sub-digital data management information to plural areas in the user data area. For example, copyright protection can be easily changed for each content title by placing the sub-digital data and sub-digital data management information separately by zone or content title. Furthermore, because the storage capacity of the user data area is significantly greater than that of the lead-in area, lead-out area, or BCA, numerous sub-digital data management information entries can be provided. Furthermore, the sub-digital data management information can be pre-recorded to the optical disk BCA. As with recording to the lead-in area, this enables the sub-digital data management information to be read when the disk is loaded, and enables information needed to interpret the sub-digital data to be read quickly.

With an optical disk reproduction apparatus according to this embodiment of the invention, decrypting the sub-digital data is also made difficult because jitter modulation based on a random number series is applied to the recording mark edge positions, the information (threshold value and location information) needed to extract the sub-digital data can be changed freely by disk, thereby further improving data security. Data security can also be improved without affecting copyright protection of other disks by changing the content of the sub-digital data management information by disk, even when one secret key is used on multiple disks.

Furthermore, by recording the secret key using jitter modulation whereby recording mark edges (the two edges on the ends in the direction of the track) are shifted slightly in the direction that the laser spot scans the track, a normal disk reader that does not have the ability to read data embedded in jitter cannot read the secret key.

This means that even if a normal disk reader is used to read all content on an optical disk to which a secret key is recorded and the read content is recorded directly to another optical disk, only the main digital data will be copied and the sub-digital data (secret key) recorded embedded in jitter will not be copied. It is therefore possible to distinguish, an original optical disk from an illegal copied optical disk. Copyright infringement through the distribution of pirated edition disks can therefore be avoided by providing the disk reproduction apparatus with a mechanism for permitting reproduction of only optical disks containing the secret key.

### <Embodiment 3>

In this embodiment of the present invention an encryption key for encrypting main digital data is recorded as sub-digital data to a specific area of the optical disk.

### (Optical Disk)

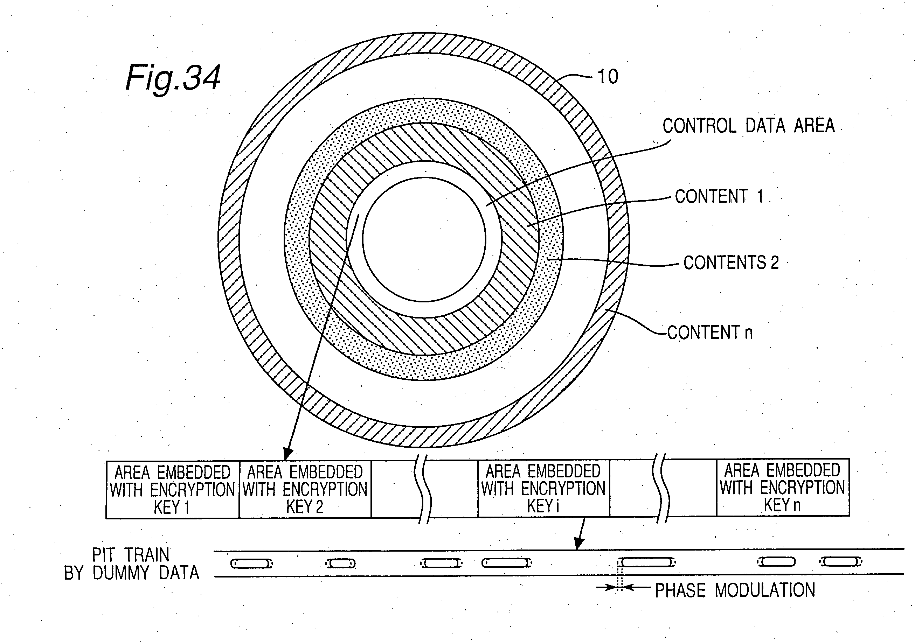

Fig. 34 shows a DVD 10 according to this embodiment of the invention. When the user data includes n content titles (title 1, title 2, ... title n), each title is encrypted with an encryption key corresponding to that title. The total number of encryption keys is n, equal to the total number of contents. These encryption keys (encryption key 1, encryption key 2, ... encryption key n) are recorded as sub-digital data to a specific area in the control data area. This sub-digital data is recorded using phase modulation shifting the recording mark edges a slight amount in the direction of the track. Encryption key 1 is the key for encrypting content 1, and the encryption key ID and content title ID are similarly correlated for the other encryption keys 2, 3, ... n.

The main digital data for recording the sub-digital data is dummy data (that is, the data itself is meaningless). One sub-digital data entry is 56 bits long, and one bit of sub-digital data is recorded superposed to a 256 byte block of the main digital data. This means that 14,336 bytes of main digital data are used to record one sub-digital data entry. The n sub-digital data entries are recorded consecutively.

This means that even if all content of a DVD containing an encryption key thus recorded is read and recorded to another DVD using a normal disk reader, only the original main digital data will be copied and the sub-digital data (encryption key) recorded embedded in jitter will not be copied. The encrypted main digital data on the illegally copied DVD therefore cannot be decrypted by the disk reader. Copyright infringement through the distribution of pirated DVDs can therefore be avoided.

Furthermore, by recording the encryption key to the control data area, a legal DVD disk reader with a function for reading the encryption key when the disk is loaded can access the disk content, but an illegal disk reader without this function cannot decrypt the encrypted main digital data. Copyright infringement through the distribution of disk readers for pirated DVDs can therefore be avoided.

Furthermore, when the user data contains plural content titles and the content titles are recorded encrypted with a different encryption key for each content title, decrypting all content will not be possible even if one encryption key is read and the corresponding content title decrypted. Powerful user data security can thus be assured.

The user data content can also contained unencrypted content titles. Encrypted content can also contain some unencrypted data. This is useful when it is desirable to record previews of movie titles, corporate.PR content, product advertisements, and other such information as unencrypted content.

Two or more encryption keys can also be used to encrypt a single content title. This enables keys to be used exclusively in combination with a product ID or electronic money, for example.

### (Optical Disk Recorder)

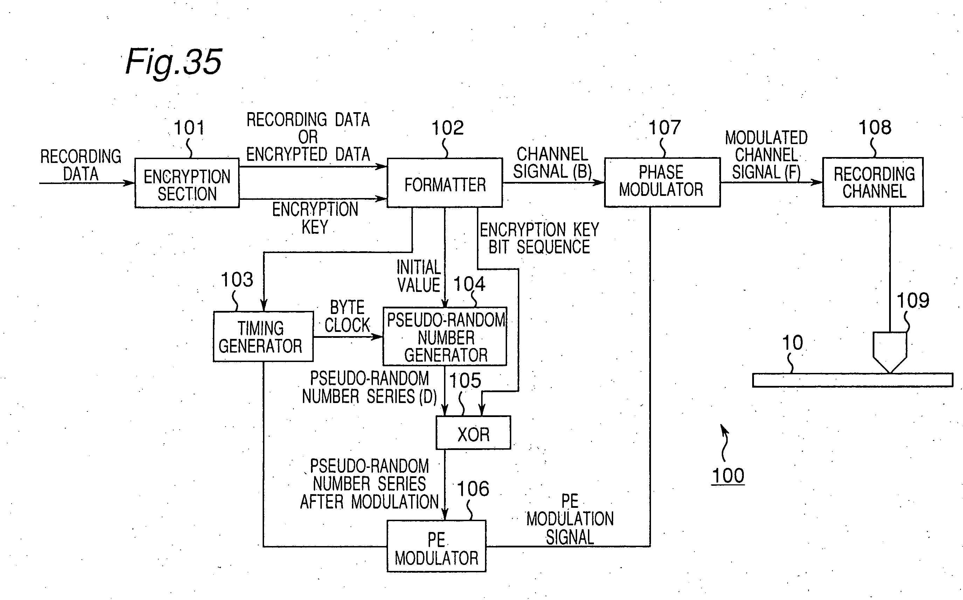

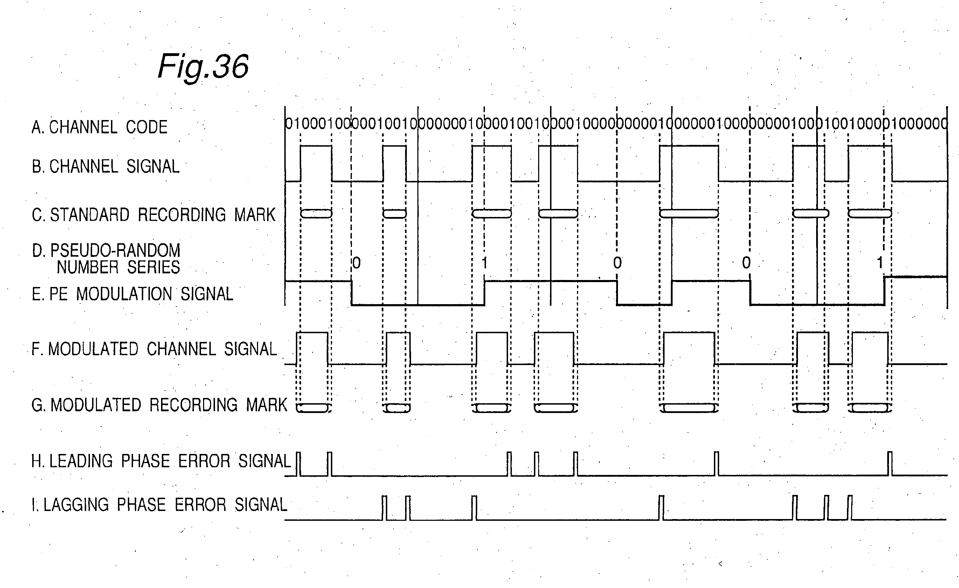

Fig. 35 is a block diagram showing the major parts of an optical disk reproducing apparatus according to the present invention. The waveforms of signals B, D, E, F in Fig. 35 are as shown in the timing chart in Fig. 36.

This reproducing apparatus 100 is a system for recording main digital data by forming optically readable recording marks. The reproducing apparatus 100 is a DVD-ROM reproducing apparatus having a function for encrypting the main digital data according to an encryption key, and a function for recording the encryption key as sub-digital data by phase modulation shifting the recording mark edges slightly in the direction of the track. The reproducing apparatus 100 has a recording channel 108, recording head 109, encryption section 101 for encrypting the main digital data, formatter 102, pseudo-random number generator 104, timing generator 103, XOR gate 105, PE (Phase Encoding) modulator 106, and phase modulator 107.

At recording contents, the encryption section 101 encrypts the main digital data using the encryption key and passes the encrypted data to the formatter 102. At recording the encryption key, the encryption section 101 outputs the encryption key and recording data in which the main digital data is not encrypted to the formatter 102.

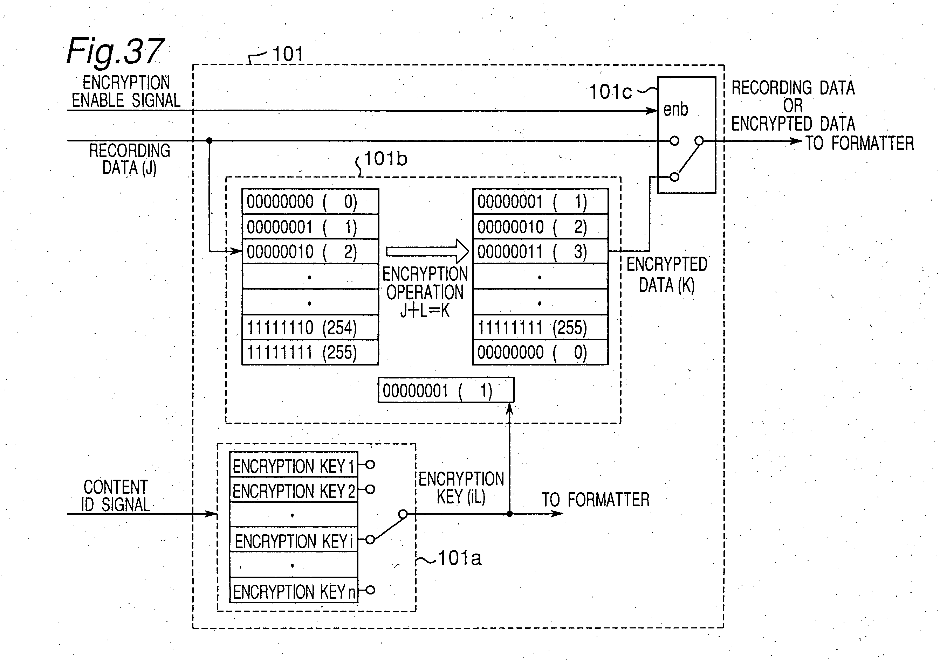

Fig. 37 is a block diagram showing the detailed configuration of the encryption section 101. The encryption section 101 has an encryption key selector 101a, encryption encoder 101b, and data selector 101c. The encryption key selector 101a holds plural encryption keys and selects an encryption key L corresponding to the content. The encryption encoder 101b encrypts recording data J input to the reproducing apparatus using the encryption key L. The data selector 101c selects encrypted data K when the encryption enable signal is 1, and selects the unencrypted recording data J when the encryption enable signal is 0.

An operation for recording the encryption key to a specific location in the control data area is described first. The encryption key selector 101a internally stores n encryption keys. When the encryption key selector 101a receives a command to start recording the encryption key for the i-th content title (content ID = i, i = 1, 2, ... n) (this operation is referred to below as "encryption key recording mode"), and the content ID signal identifying content ID = i from a controller (not shown in the figure), the encryption key selector 101a selects and outputs encryption key i to the formatter 102.

The data selector 101c receives the encryption enable signal of 0 from the controller (not shown in the figure) at this time, selects recording data that is not encrypted, and outputs the recording data to the formatter 102. The formatter 102 controls modulating the main digital data (recording data), specifying the sub-digital data, and recording the sub-digital data.

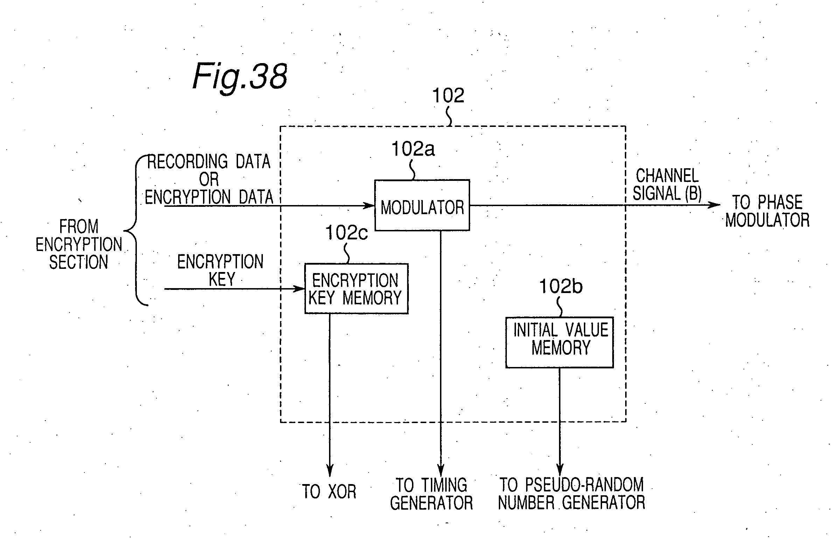

Fig. 38 is a block diagram showing the detailed configuration of the formatter 102. The formatter 102 has a modulator 102a, initial value memory 102b, secret key memory 102f, and encryption key memory 102c. The modulator 102a modulates the recording data input to the reproducing apparatus 100 to a signal (channel signal B) appropriate to the DVD 10. The initial value memory 102b confidentially prestores the initial value for a pseudo-random number series generated by pseudo-random number generator 104. The encryption key memory 102c stores the 56-bit encryption key input from the encryption section.

As shown in the timing chart in Fig. 36, the modulator 102a converts the input recording data in 8-bit code (byte) units to a 16-bit channel code A (8-16 conversion), then applies NRZI conversion to generate channel signal B, and outputs to the phase modulator 107. When the encryption key recording mode starts, the modulator 102a outputs a timing signal indicating the start of a byte each time one byte of recording data is input to the timing generator 103.

When the encryption key recording mode starts, the initial value memory 102b outputs the prestored 15-bit initial value to the pseudo-random number generator 104.

When the, encryption key recording mode starts, the encryption key memory 102c outputs the 56-bit encryption key input from the encryption section one bit at a time from the LSB in NRZ format to the XOR gate 105. The encryption key memory 102c outputs the next-highest bit each time the modulator 102a modulates 256 bytes of recording data. In other words, the encryption key memory 102c bit-serially outputs a single 56-bit encryption key to the XOR 121c as an encryption key bit sequence corresponding to a total 256 x 56 bytes of recording data.

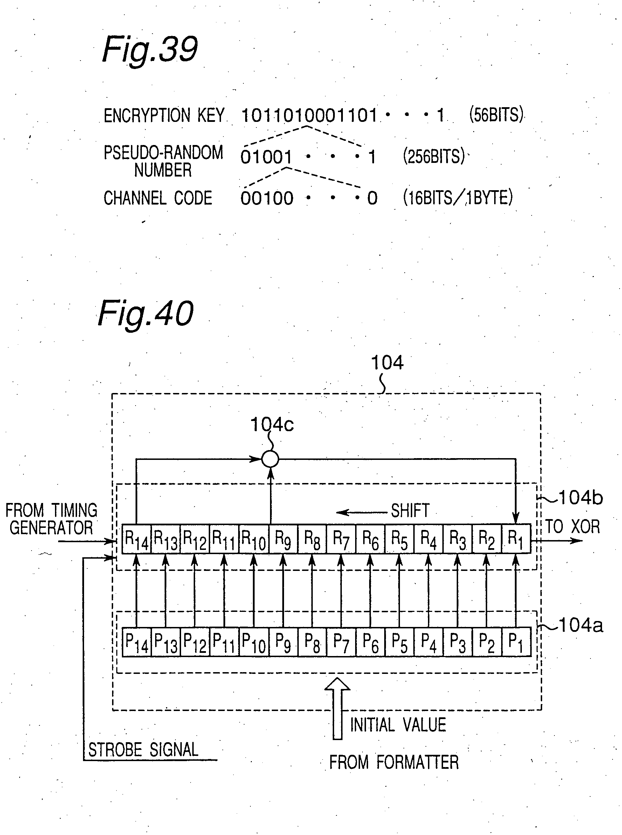

Fig. 39 shows the correlation between the encryption key, pseudo-random number series, and recording data. In order to record a 56-bit encryption key to disk as a digital watermark, a 256-bit pseudo-random number series is used for each bit of the encryption key, and each bit of this pseudo-random number series is embedded in 1 byte of recording data (16 channel code). Note that each bit of this 56-bit encryption key is used as a flag indicating whether or not the corresponding 256-bit pseudo-random number series is logically inverted as more fully described below.

The timing generator 103 (i) outputs a clock signal (byte clock) synchronized to each byte of the recording data based on the timing signal from the modulator 102a to the pseudo-random number generator 104, and (ii) based on this timing signal and a clock signal from a clock oscillator (not shown in the figure), outputs the center (the 180-degree phase point) of channel signal B output from the formatter 102 to the PE modulator 106.

The pseudo-random number generator 104 generates a pseudo-random number series (M series) with a 2¹⁵ bit sequence per cycle using the preset initial value from the initial value memory 102b and the byte clock from the timing generator 103 as a shift clock.

Fig. 40 is a circuit diagram showing the detailed configuration of the pseudo-random number generator 104. The pseudo-random number generator 104 includes a 15-bit preset initial value register 104a for storing the initial value from initial value memory 102b, a 15 stage (bit) shift register 104b, and a XOR gate 104c for performing the exclusive OR operation from the MSB (14th bit) and 10th bit in the shift register 104b.

When the initial value from initial value memory 102b is set in the preset initial value register 104a, the initial value is written to the shift register 104b by the strobe signal sent immediately thereafter from the formatter 102. Synchronized to the byte clock from timing generator 103, the 15-bit value stored to shift register 104b is shifted one column left and the output from XOR gate 104c is then fed back and stored to the LSB (0th bit) of the shift register 104b. This produces a new random number with one bit for each byte at the MSB of the shift register 104b, and this new random number is sent to the XOR gate 105 as the pseudo-random number series.

The pseudo-random number generator 104 is used in this embodiment to generate the 256 x 56 bit pseudo-random number series embedded in 256 x 56 bytes of recording data in the encryption key recording mode.

The XOR gate 105 performs exclusive OR operation from the pseudo-random number series from the pseudo-random number generator 104 and the bit sequence from the encryption key memory 102c, and outputs the resulting pseudo-random number series D to the PE modulator 106. That is, the XOR gate 105 selectively feeds the 256 bit pseudo-random number series generated by the pseudo-random number generator 104 to the PE modulator 106, directly or after logical inversion of the 256 bit pseudo-random number series according to each bit of the 56-bit encryption key.

Based on the timing signal from the timing generator 103, the PE modulator 106 applies PE (phase encoding) modulation to the pseudo-random number series D from the XOR gate 105, and outputs the resulting PE modulated signal E to the phase modulator 107. As a result, as shown in the timing chart in Fig. 36, PE modulated signal E falls in the middle of channel signal B when pseudo-random number series D from the XOR gate 105 is 0, rises when pseudo-random number D is 1, and inverts again at the border of the channel signal B when the same random number repeats.

Based on the PE modulated signal E from the PE modulator 106, the phase modulator 107 performs phase modulation so that an edge of the channel signal B from the formatter 102 leads or lags a slight time, and outputs the resulting modulated channel signal F to the recording channel 108. Note that this slight time is preset to half (σ/2) the standard deviation (σ) of the frequency distribution of jitter observed when a normal DVD which is recorded with only the main digital data by bypassing the phase modulator 107 (the sub-digital data is not recorded) is played back on a normal reproducing apparatus.

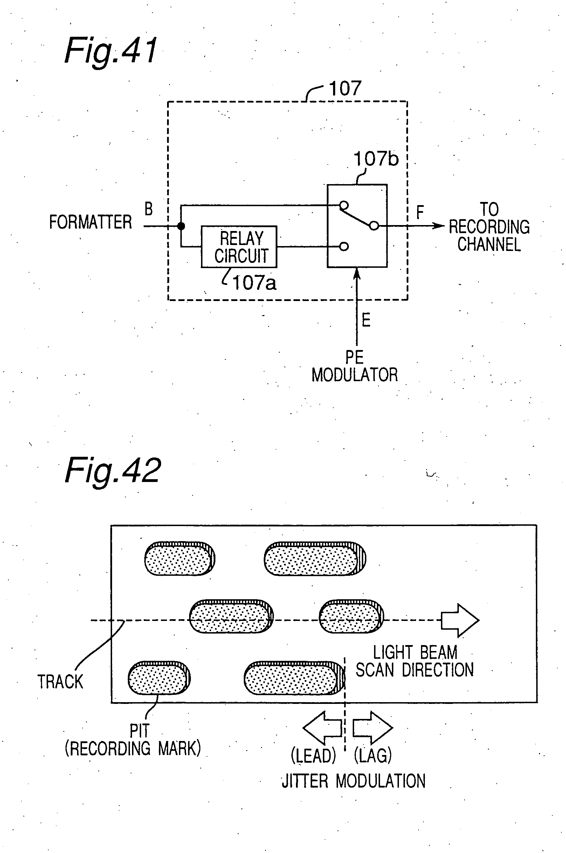

Fig. 41 is a block diagram showing the detailed configuration of the phase modulator 107. The phase modulator 107 has a delay 107a for delaying the input signal by the above slight time, and a selector 107b with two inputs and one output. When the PE modulated signal E input as the control signal is 1, the selector 107b passes channel signal B input directly from the formatter 102. When the PE modulated signal E is 0, the selector 107b passes the channel signal input by way of the delay 107a.

As a result, the phase of the rising and falling edges of channel signal B input to the phase modulator 107 are (in a relative time relationship) advanced the above-noted slight time when the PE modulated signal E is 1 (0 to 180 degrees) and delayed the slight time when the PE modulated signal E is 0 (180 to 360 degrees). In other words, the channel signal B input to the phase modulator 107 is modulated with jitter based on the pseudo-random number series D and converted to the modulated channel signal F as shown in Fig. 36.

The recording channel 108 produces a control signal for switching the laser beam emitted to the DVD 10 on/off synchronized to 1/0 of the modulated channel signal F from the phase modulator 107, and sends the control signal to the recording head 109. Based on the control signal from the recording channel 108, the recording head 109 cuts the recording marks into a spiral pattern on the surface of the rotating DVD 10 by emitting a light beam while switching the laser beam on and off. As a result, modulated recording marks G consisting of optically readable asperity pits are formed in the DVD 10.

Fig. 42 shows the surface of the recording film on a DVD 10 having pits formed by recording head 109. The two edges (in the scanning direction of the light spot) of a pit formed in the encryption key recording mode are formed with phase leading (or lagging) by displacement amount corresponding to the constant slight time relative to edge positions of a pit not formed in the encryption key recording mode.

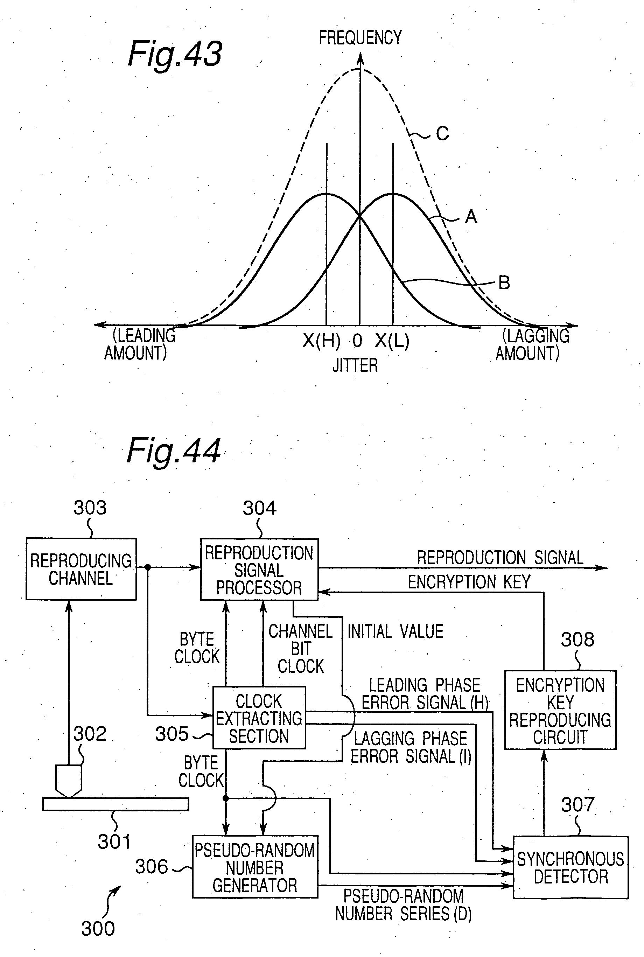

Fig. 43 is a graph showing the frequency distribution of jitter observed for pits formed in the encryption key recording mode, that is, modulated recording marks G recorded with jitter modulation.

Curve A shows the jitter distribution for only the edges of modulated recording marks G generated when the PE modulated signal E is 0, and is a near-Gaussian distribution in which the highest frequency is the position X(L) which the phase is shifted in a lagging direction by the displacement amount. Curve B shows the jitter distribution for only the edges of modulated recording marks G generated when the PE modulated signal E is 1, and is a near-Gaussian distribution in which the highest frequency is the position X(H) where the phase is shifted in the leading direction by the displacement amount. Curve C shows the overall jitter distribution for the combined curves A and B.

The present invention uses the fact that the jitter distribution of the curve C can be separated into the curves A and B when synchronous detection is performed using the same pseudo-random number series as that used at recording the encryption key.

Encryption key i is recorded using the sub-digital data recording method described above. This operation continues for encryption keys 1 to n so that n encryption keys are recorded continuously to a specific region in the data recording area.

The content encryption and recording operation is described next using by way of example encrypting and recording an i-th content title (content ID = i, i = 1, 2, ... n). When receiving a command to start encrypting and recording the main digital data for content title i, (this operation is referred to below as "main digital data encryption and recording mode"), and the content ID signal identifying content ID = i from a controller (not shown in the figure), the encryption key selector 101a selects and outputs encryption key i to the encryption encoder 101b.

The encryption encoder 101b adds the value of encryption key i to 8 bits of the input recording data, and outputs to the data selector 101c. For example, when the encryption key i is 1, it adds 1 to the 8-bit recording data.

When the data selector 101c receives encryption enable signal 1 from a controller (not shown in the figure), it selects and outputs the encryption data to the formatter 102. The recording data is thus encrypted using encryption key i.

The modulator 102a converts the input encryption data in 8-bit symbol (byte) units to a 16-bit channel code A (8-16 conversion), then applies NRZI conversion to generate the channel signal B, and outputs to the phase modulator 107. The phase modulator 107 outputs the channel signal B to the recording channel without phase modulation.

The recording data is thus encrypted according to encryption key i and recorded. This operation is repeated for content 1 to n, and the content data is encrypted and recorded with the encryption key updated for each content title.

This means that even if a normal reproduction apparatus is used to read all content on a DVD to which an encryption key is recorded and the read content is recorded directly to another DVD, only the main digital data will be copied and the sub-digital data (encryption key) recorded embedded in jitter will not be copied. The reproduction apparatus will therefore not be able to decrypt and play back the encrypted main digital data from the illegally copied DVD. Copyright infringement through the distribution of pirated editions can therefore be avoided.

### (Optical Disk Reproduction Apparatus)

A reproduction apparatus operable to a DVD recorded with encryption keys as described above is described next below.

Fig. 44 is a block diagram showing the major parts of an optical disk reproduction apparatus 300 according to the present invention.

The reproduction apparatus 300 is a DVD reproduction apparatus corresponding to the DVD reproducing apparatus 100 described above. In addition to a function for reproducing the main digital data based on the locations of the recording marks on the DVD, the reproduction apparatus 300 has also a function for detecting the sub-digital data (encryption key) embedded in jitter of the recording marks observed during data reproduction, and decrypting the encrypted main digital data based on the detected encryption key.

The reproduction apparatus 300 has a reproduction head 302, reproducing channel 303, reproduction signal processor 304, clock extracting section 305, synchronous detector 307, encryption key reproducing circuit 308, and pseudo-random number generator 306.

The reproduction head 302 is an optical pickup. It emits a focused light beam on the recording marks on the spinning DVD 301, generates an analog read signal indicating the edge positions of the recording marks, and outputs to the reproducing channel 303. The reproducing channel 303 converts the analog read signal from the reproduction head 302 to a digital read signal by waveform equalization and shaping, and outputs to the reproduction signal processor 304 and the clock extracting section 305.

Based on the read signal from the reproducing channel 303, the clock extracting section 305 extracts and generates four clock signals, that is, (i) a channel bit clock synchronized to the bits of the channel code, (ii) a leading phase error signal H indicating only the leading component of the read signal referenced to the channel bit clock, (iii) a lagging phase error signal I similarly indicating only the lagging component, and (iv) a byte clock synchronized to the (byte unit) recording data in the read signal. The clock extracting section 305 then outputs each clock signal (i) to the reproduction signal processor 304, (ii) to the synchronous detector 307, (iii) to the synchronous detector 307, and (iv) to the reproduction signal processor 304, synchronous detector 307, and pseudo-random number generator 306, respectively.

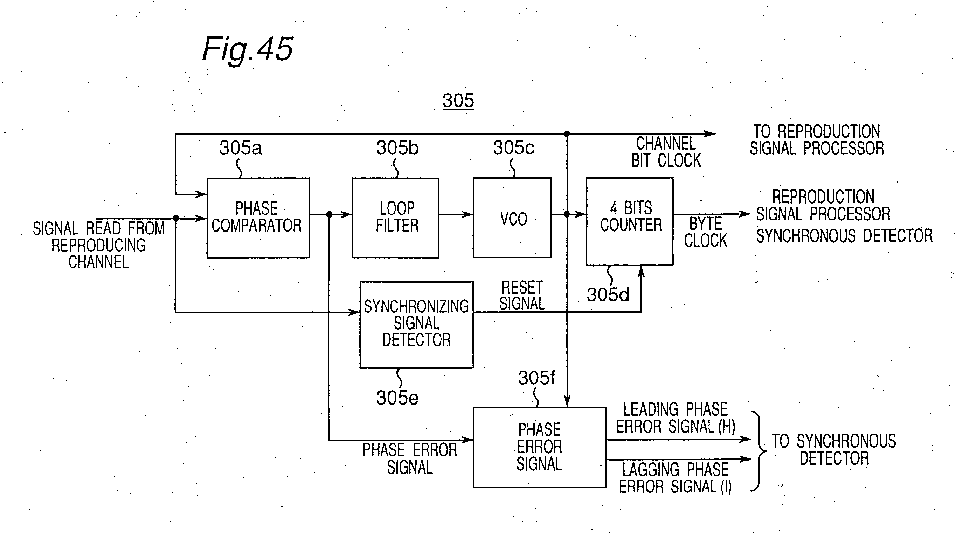

Fig. 45 is a block diagram showing the detailed configuration of the clock extracting section 305. The clock extracting section 305 comprises a PLL circuit, a 4-bit counter 305d, a synchronization signal detector 305e, and a phase error signal separator 305f. The PLL circuit comprises a phase comparator 305a, loop filter 305b, and VCO (Voltage Controlled Oscillator) 305c.

The phase comparator 305a is a counter, exclusive OR gate, or flip-flop, for example. The phase comparator 305a calculates the phase error between the rising and falling edges of the read signal and the rising edge of the channel bit clock closest to the read signal edge from the channel bit clock input as feedback from the VCO 305c and read signal from the reproducing channel 303. The result is output as the phase error signal to the loop filter 305b and phase error signal separator 305f.

The loop filter 305b is a low-pass filter that smoothens the phase error signal from the phase comparator 305a and converts it to a dc voltage signal. The VCO 305c generates a channel bit clock of a frequency corresponding to the voltage signal from the loop filter 305b.

The synchronization signal detector 305e detects the synchronization pattern contained in the read signal, and outputs it as a reset signal to the 4-bit counter 305d. The 4-bit counter 305d is a counter that applies 1/16 frequency division to the channel bit clock from VCO 305c, and is reset by the reset signal from synchronization signal detector 305e. That is, 4-bit counter 305d outputs a byte clock synchronized to the recording data (byte unit) in the read signal.

The phase error signal separator 305f separates the phase error signal from the phase comparator 305a into the leading phase error signal H and lagging phase error signal I to feed them into the synchronous detector 307.

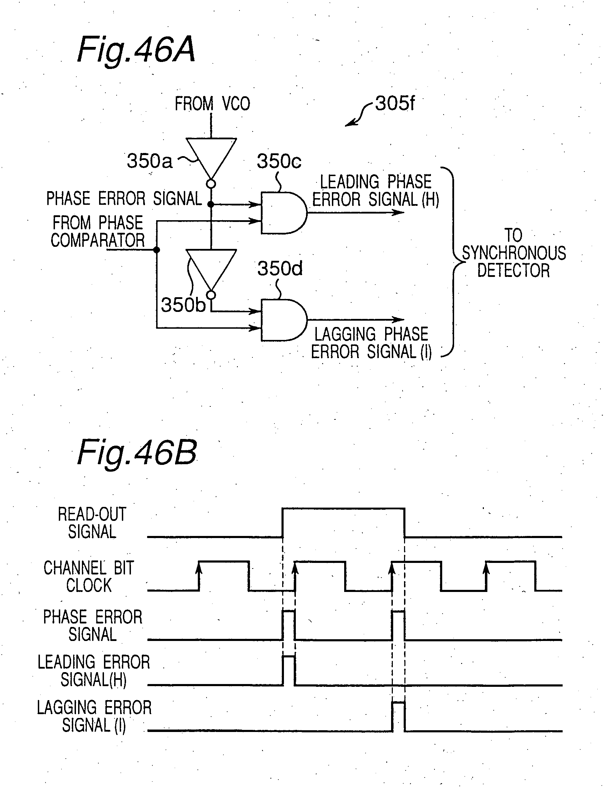

Fig. 46A is a schematic circuit diagram showing the detailed configuration of the phase error signal separator 305f. The phase error signal separator 305f comprises two inverters 350a, 350b, and two AND gates 350c and 350d. Fig. 46B is a timing chart of signals used to describe the operation of the phase error signal separator 305f shown in Fig. 46A.

As shown in Fig. 46B, a leading phase error component and a lagging phase error component are included in the phase error signal output from the phase comparator 305a. Since these phase error signals H and I are separated synchronized to the channel bit clock, a waveform of the signal (leading phase error signal H) output from the AND gate 350c shows only the leading phase error signal component, and a waveform of the signal (lagging phase error signal I) output from the AND gate 350d shows only the lagging phase error signal component.

The reproduction signal processor 304 is a circuit for demodulating the read signal from the reproducing channel 303, controlling detection of sub-digital data, and providing copyright protection based on the detection result. In addition, the reproduction signal processor 304 decodes the demodulated signal based on the encryption key read during encryption key reading operation when a content is reproduced, and outputs the decoded signal as the reproduction signal. The demodulation signal is output as the reproduction signal when the encryption key is read out.

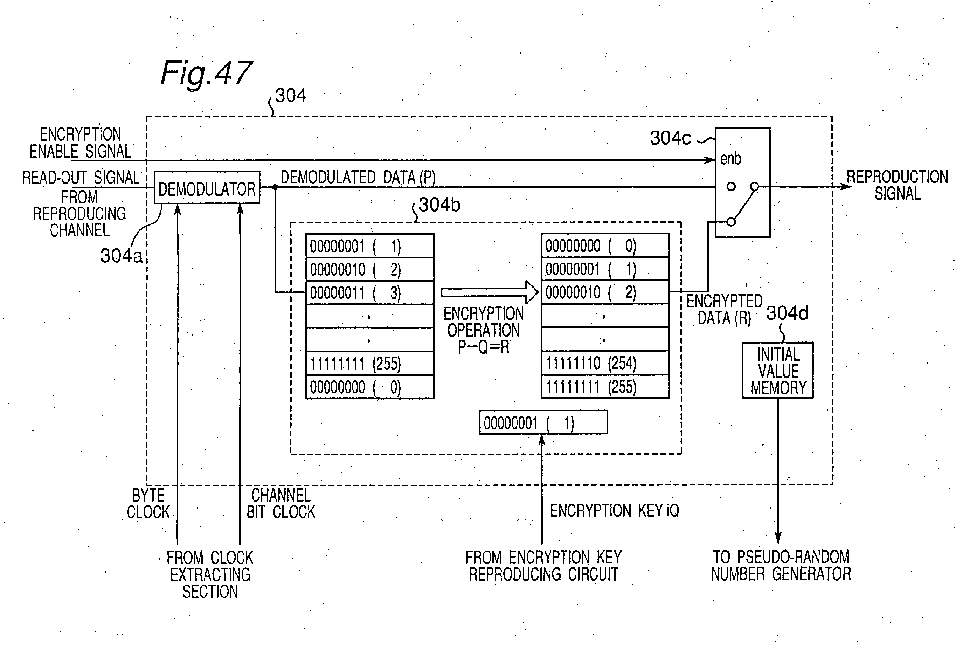

Fig. 47 is a block diagram showing the detailed configuration of the reproduction signal processor 304. The reproduction signal processor 304 comprises a demodulator 304a, a decoder 304b, a data selector 304c, and initial value memory 304d.

Reading the sub-digital data (encryption key) recorded to a specific area in the control data area is described below. As described above, n encryption keys are embedded as sub-digital data in a specific part of the control data area when the user data contains n content entries.

After a disk is inserted to a drive, the encryption key reproducing circuit 308 reads the encryption keys from the specific area in the control data area during the lead-in operation, and stores the n encryption keys to the encryption key reproducing circuit 308.

When notification saying that an encryption key is started to be read from the specific area of the control data area (this operation is referred to below as "encryption key reading mode") is received from a controller (not shown in the figure), the reproduction signal processor 304 outputs the initial value stored in the initial value memory 304d to the pseudo-random number generator 306.

The pseudo-random number generator 306 has the same functions as the pseudo-random number generator 104 of the optical disk recording apparatus 100. The pseudo-random number generator 306 generates a pseudo-random number series (M series) with a 2¹⁵ bit sequence per cycle, using an initial value from the initial value memory 304d as the preset value, and the byte clock from the clock extracting section 305 as a shift clock. In the reproduction apparatus 300 the pseudo-random number generator 306 is used to generate a 256 x 56 bit pseudo-random number series.

The synchronous detector 307 is a circuit for detecting the correlation between the pseudo-random number series from the pseudo-random number generator 306 and the leading phase error signal H and lagging phase error signal I output from the clock extracting section 305, and conveying the detection result (positive correlation/negative correlation/no correlation) for each pseudo-random number (1 bit) to the encryption key reproducing circuit 308.

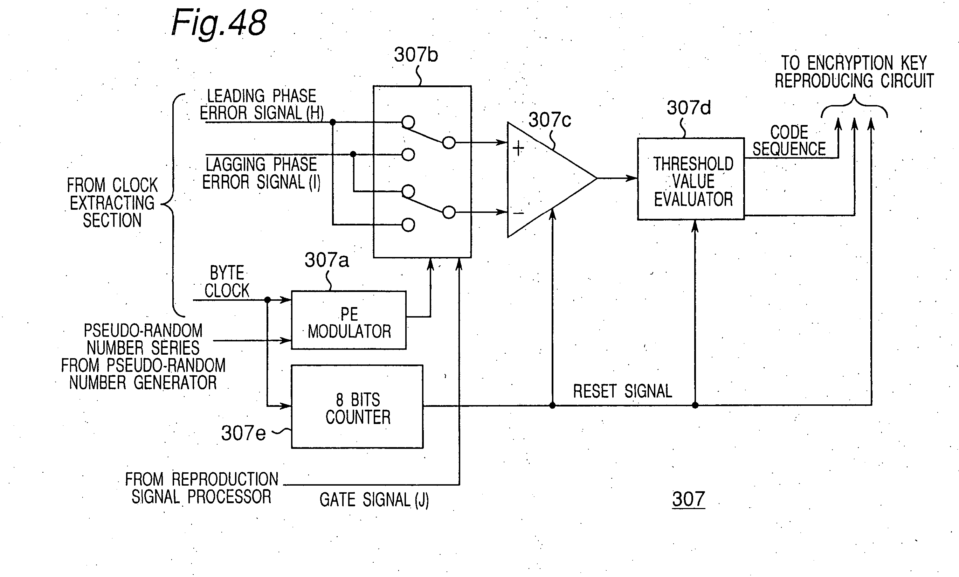

Fig. 48 shows the detailed configuration of the synchronous detector 307. The synchronous detector 307 comprises a PE modulator 307a, a selector 307b, an integrator 307c, a threshold value evaluator 307d, and an 8-bit counter 307e.

The PE modulator 307a is a modulator having functions corresponding to respective function of the timing generator 103 and the PE modulator 106 in the recording apparatus 100. Based on the byte clock from the clock extracting section 305, the PE modulator 307a performs PE modulation to the pseudo-random number series from the pseudo-random number generator 306 to feed the modulation result as a selection control signal into the selector 307b. More specifically, the PE modulator 307a outputs to the selector 307b a signal wave that falls at the middle of each recording data byte in the reproduced read signal when the pseudo-random number from the pseudo-random number generator 306 is 0, that rises when the pseudo-random number is 1, and that inverts again at the edge of each recording data byte when the same pseudo-random number repeats.

The selector 307b comprises two selectors each having two inputs and one output. When the control signal from the PE modulator 307a is 1, the selector 307b passes the phase error signals H and I from the clock extracting section 305 to the positive and negative input terminals of the integrator 307c, respectively. When the control signal is 0, it passes signals H and I crossed to the negative and positive input terminals of the integrator 307c, respectively.

The 8-bit counter 307e is a counter that applies 1/256 frequency division to the byte clock from the clock extracting section 305. It outputs the division result as a reset signal to the integrator 307c, the threshold value evaluator 307d, and the encryption key reproducing circuit 308. This reset signal thus outputs one result pulse each time the pseudo-random number generator 306 outputs a 256-bit random number series.

The integrator 307c is a differential input, bipolar output analog integrator. Parallel to adding and accumulating the area of pulses input to the positive input terminal, the integrator 307c subtracts and accumulates the area of pulses input to the negative input terminal, and outputs an analog signal corresponding to the total accumulated area to the threshold value evaluator 307d. If the reset signal is applied from the 8-bit counter during this time, the integrator 307c restarts from zero.

As a result, when the PE modulated signal from the PE modulator 307a is 1, the output wave from the integrator 307c indicates the total accumulated area of the additively accumulated area of the pulses in the leading phase error signal H and the subtractively accumulated area of the pulses in the lagging phase error signal I. When the PE modulated signal is 0, the output wave indicates the total accumulated area of the subtractively accumulated area of the pulses in the leading phase error signal H and the additively accumulated area of the pulses in the lagging phase error signal I.

The output wave of the integrator 307c is therefore a ramp wave with a positive slope when a positive correlation continues (while the positive correlation continues, pulses only appear in the leading phase error signal H when the PE modulated signal is 1, and only appear in the lagging phase error signal I when the PE modulated signal is 0.). Conversely, when a negative correlation continues (while the negative correlation continues, pulses appear only in the lagging phase error signal I when the PE modulated signal is 1, and appear only in the leading phase error signal H when the PE modulated signal is 0), the output wave from the integrator 307c is a ramp wave with a negative slope. When neither a positive or negative correlation exists, that is, when pulses appear randomly in the phase error signals H and I irrespective of the PE modulated signal, the output wave from the integrator 307c is held at a value near zero because the frequency of both pulses in these errors signals is substantially equal.

The threshold value evaluator 307d is a comparator or other device for determining in which of predetermined three voltage ranges the analog signal from the integrator 307c is located.

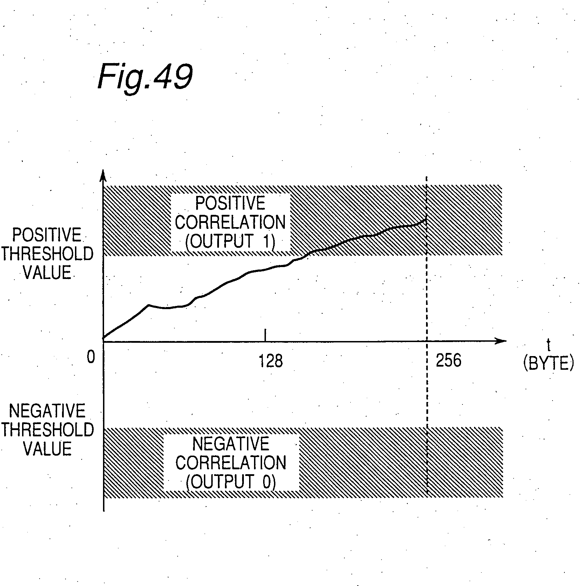

Fig. 49 describes the operation of the threshold value evaluator 307d, and shows the analog signal wave input from the integrator 307c to the threshold value evaluator 307d. At the point (more specifically, immediately before) the reset signal is applied from the 8-bit counter 307e, the threshold value evaluator 307d outputs to the encryption key reproducing circuit 308 an NRZ format code sequence that is 1 when the signal voltage from the integrator 307c is, greater than the positive threshold value or is 0 when less than the negative threshold value.

The threshold values are set so that when jitter modulation according to the present invention is applied the threshold voltages are exceeded reliably (that is, with an extremely high probability) by the output voltage of the integrator 307c, but are not exceeded (that is, with an extremely low probability) when jitter modulation is not applied by the output voltage of the integrator 307c. The specific value is determined according to, for example, jitter modulation during recording (the delay of delay 107a in phase modulator 107), the number of bytes (256) input to the integrator 307c, the average edge count per byte, or the standard deviation in a natural (randomly occurring) jitter distribution.

The code sequence output from the threshold value evaluator 307d thus shows the change in the polarity (positive or negative) of the correlation observed at each 256-bit pseudo-random number. This polarity change is information corresponding to a bit sequence indicating for each 256-bit pseudo-random number series whether the pseudo-random number series was recorded by jitter modulation without logic inversion or was recorded after logic inversion.

Based on the code sequence from the synchronous detector 307, the encryption key reproducing circuit 308 reads the encryption keys used to encrypt the content, and stores the plural encryption keys in the encryption key selector.

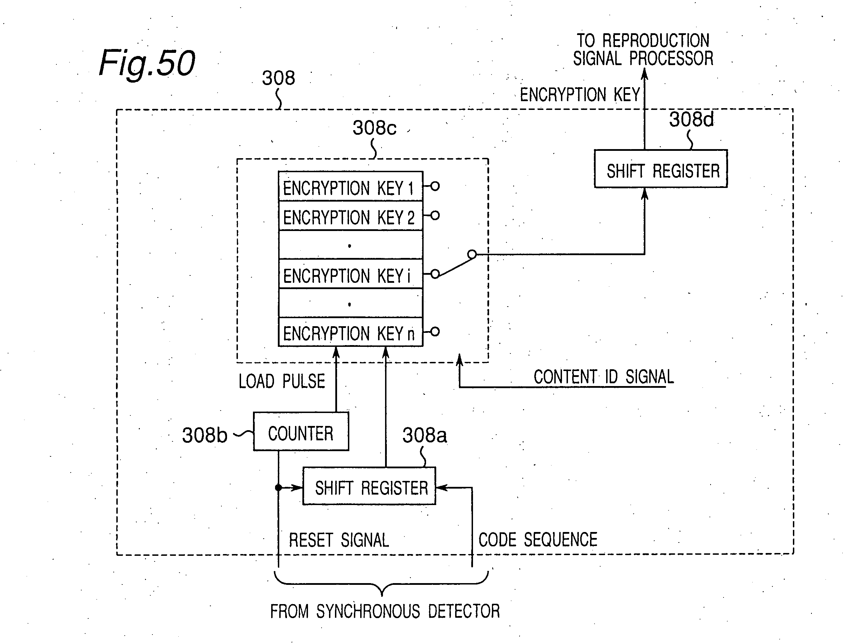

Fig. 50 is a block diagram showing the detailed configuration of the encryption key reproducing circuit 308. The encryption key reproducing circuit 308 includes a shift register 308a, counter 308b, encryption key selector 308c, and encryption key memory 308d.

The shift register 308a is a 56-stage (bit) shift register for shifting and storing the code sequence from the synchronous detector 307 using the reset signal from the synchronous detector 307 as the shift clock. Immediately after the 56-bit code sequence is input to shift register 308a, the counter 308b outputs a load pulse to the encryption key selector 308c. The encryption key selector 308c thus receives the value of the shift register.

Simultaneously to receiving the load pulse from the counter 308b, the encryption key selector 308c receives an encryption key ID signal identifying the current i-th encryption key from a controller (not shown in the figure), and stores the value input from the shift register to a location where the encryption key corresponding to the encryption key ID is stored.

This operation is repeated for encryption keys 1 to n to read and store the n encryption keys from the control data area to the encryption key selector 308c.

The content decryption and reproduction operation based on the encryption key is described next using by way of example decrypting and reproducing an i-th content title (content ID = i, i = 1, 2, ... n). When the encryption key selector 308c receives a command to start decrypting and reproducing the main digital data for content title i, (this operation is referred to below as the main digital data decryption and reproduction mode), and the content ID signal identifying content ID = i from a controller not shown in the figure, it selects encryption key i, stores the encryption key to the encryption key memory 308d and outputs the encryption key to the reproduction signal processor 304.

The demodulator 304a corresponds to the modulator 102a of the optical disk reproducing apparatus 100. The demodulator 304a samples and demodulates the read signal from the reproducing channel 303 to, channel code A synchronized to the channel bit clock from the clock extracting section 305, performs 16-8 modulation to convert channel code A to the 8-bit recording data corresponding to each channel code synchronized to the byte clock from the clock extracting section 305, and sends the recording data stream to the decryption decoder 304b and the data selector 304c.

The decryption decoder 304b subtracts the value Q of encryption key i from the 8-bit recording data P, and outputs decoded data R to data selector 304c. For example, if the encryption key i is 1, 1 is subtracted from the 8-bit recording data P. The data selector 304c selects decoded data R for output as the reproduction signal. The read signal is thus decoded according to encryption key i.

It is therefore possible to prevent illegal reproduction of recording data from a DVD from which the encryption key cannot be read because the encrypted recording data cannot be decrypted. As a result, even if a new DVD is produced by making a dead copy of a legal DVD containing an encryption key, the copyright of content recorded on the DVD can be protected because the main digital data cannot be decrypted by the reproduction device unless the encryption key embedded by jitter modulation is also copied.

The conventional DVD encryption method records the disk and title keys to the disk as data, making it possible to illegally read the keys. The method of the present invention, however, embeds the encryption keys by jitter modulation, thereby making encryption key detection significantly more difficult. This improves encryption key security and confidentiality.

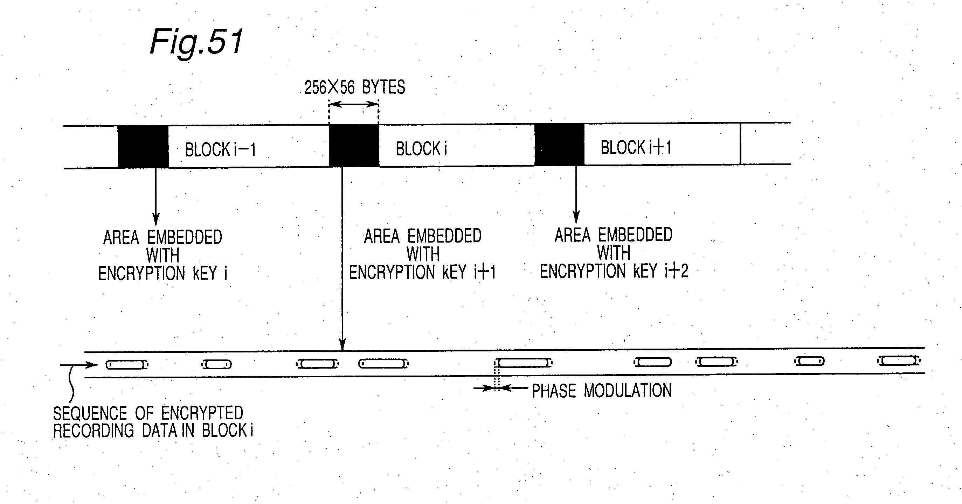

In addition, the prior art reproduction method uses an evaluation circuit to differentiate legal disks and illegal copies, and simply sends an enable signal to the reproduction signal processor to enable reproduction when the disk is recognized as a legal disk. This prior art method as shown in Fig. 51 however can be easily defeated by modifying the circuitry so as to output an illegal enable signal to the reproduction signal processor. It is therefore not possible to prevent playing illegal copies.

With the method of this embodiment, however, the optical disk reproduction apparatus must read an encryption key corresponding to the content to be reproduced from sub-digital data recorded to a data control area, and decrypt the main digital data encrypted with that encryption key. This means that even if the reproduction apparatus is modified as described above, the copyright of the disk content can be protected because the reproduction apparatus cannot decrypt the encrypted main digital data.

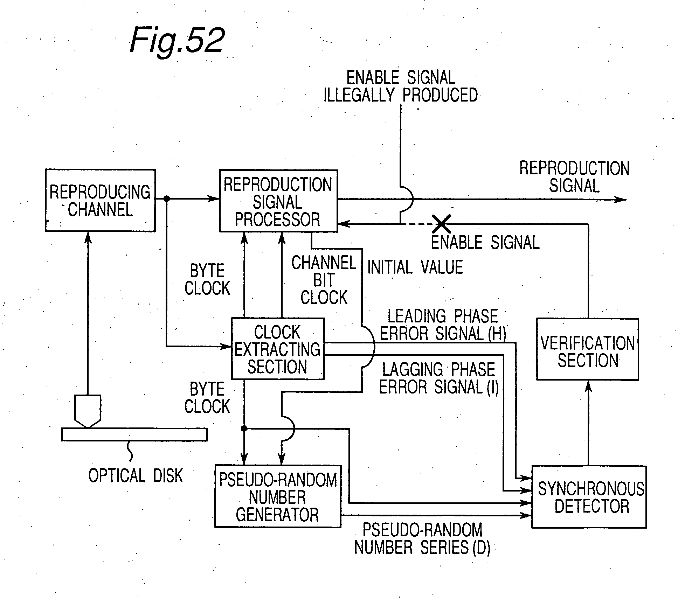

Moreover, the above method whereby an evaluation circuit sends an enable signal to the reproduction signal processor to enable data reproduction may not be possible to prevent reproduction of illegal disk copies by an optical disk reproduction apparatus that does not have this evaluation function as shown in Fig. 52.

With the present embodiment of this invention the optical disk reproduction apparatus must read an encryption key corresponding to the content to be reproduced from sub-digital data recorded to a data control area, and decrypt the main digital data encrypted with that encryption key. An optical disk reproduction apparatus that does not have a function for detecting the sub-digital data therefore cannot decrypt the encrypted main digital data, and the copyright can therefore be protected.

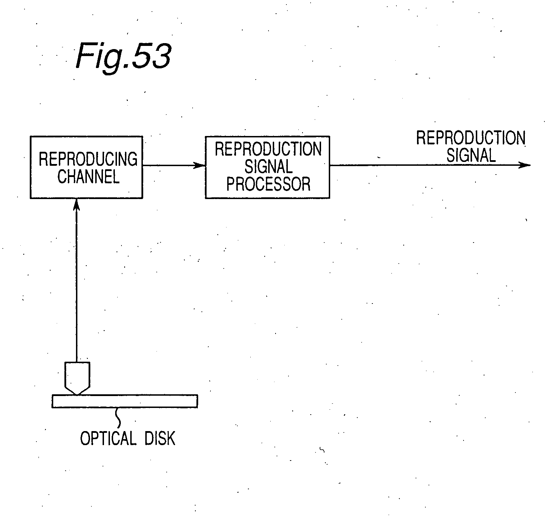

Yet further, even if an illegal encryption key is input from an external device or software as shown in Fig. 53 to read data from a legal disk, the encryption keys must be decrypted for all content. This significantly increases the work involved in the encryption key decryption process, and effectively makes reading the data more difficult.

A data recording medium and recording and reproduction apparatuses for encrypting and decrypting main digital data using sub-digital data according to the present invention are described above, but it will be obvious that the present invention shall not be so limited and can be varied in many ways.

For example, a 256 x 56 bit pseudo-random number series logically inverted according to a single 56-bit encryption key is embedded in this embodiment to 256 x 56 consecutive bytes of recording data. The invention shall not, however, be limited to these numbers. It is also possible, for example, to embed a plurality of pseudo-random number series starting from a plurality of (one, two, or more) kinds of initial values in a plurality of areas to recording data in a specific disk area or number of bytes related to the ECC block, sector, frame, or other physical recording structure.

Furthermore, the user data in this embodiment comprises plural content entries, and each content entry is encrypted with specific encryption key for that content, but the invention shall not be so limited. For example, the user data could be segmented into a plurality of recording data units, each recording data unit containing a specific number of recording data bytes or recording data in a specific area related to the track, ECC block, sector, or other physical recording structure of the disk. Each recording data unit is then encrypted with an encryption key specific to that recording data unit. User data security is further strengthened as the number of encryption keys increases.

This embodiment of the invention uses one encryption key for each content entry, and separately encrypts each content entry, but the invention shall not be so limited. For example, one encryption key could be used for plural recording data units, thereby reducing the amount of main digital data recording encryption keys.

This embodiment records encryption keys 1 through n in ascending order to a specific part of the control data area, but the invention shall not be so limited. For example, the order in which the encryption keys are recorded could be scrambled, or the order could be determined according to a certain rule.

This embodiment records the encryption keys as phase modulated sub-digital data with the recording mark edges shifted a slight amount in the direction of the track, but the invention shall not be so limited. For example, various other methods could be used to record the sub-digital data by displacing the recording marks a slight distance in the radial direction, locally decreasing the track pitch, or using signal amplitude, the tracking error signal, focus error signal, asymmetry, modulation factor, or other technique to impart a slight change to the pit shape or signal.

Furthermore, this embodiment confidentially stores the initial values for generating the pseudo-random number series to the formatter 102 of the optical disk reproducing apparatus 100 and the reproduction signal processor 304 of the disk reader 300, but the invention shall not be so limited. For example, the optical disk reproducing apparatus could record the initial value used to record the sub-digital data to the control data area of the DVD. When the disk is then loaded to the optical disk reproduction apparatus, the reader reads the initial values from the control data area during the lead-in operation and stores the initial values to the initial value memory.

Recording the initial values shall also not be limited to the control data area as the initial values could be recorded to a specific part of the user data area. User data security can be yet further strengthened by defining plural initial values and defining a pseudo-random number series for each the recording data unit.

The encryption encoder of this embodiment adds the encryption key value to the input recording data in 8-bit blocks, but the invention shall not be so limited this encryption method.

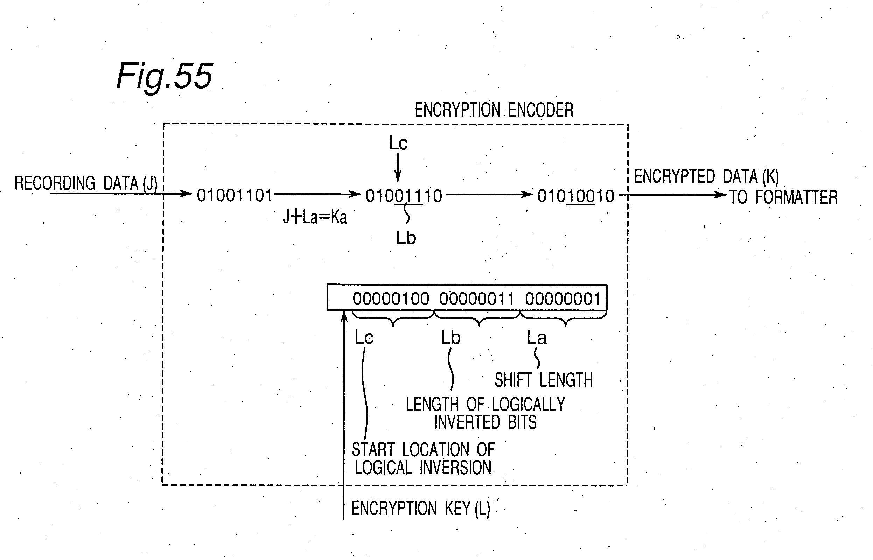

As shown in Fig. 55, for example, let La be the value of the low 8 bits of the encryption key, Lb be the value of the low bits 9 to 16, and Lc be the value of the low bits 17 to 24. The encryption encoder could then, for example, add La to 8 bits of recording data J to obtain encrypted data Ka. Then starting from the bit position defined by Lb from the low bit of Ka, the logic of the number of bits indicated by Lc is inverted to output encrypted data K.

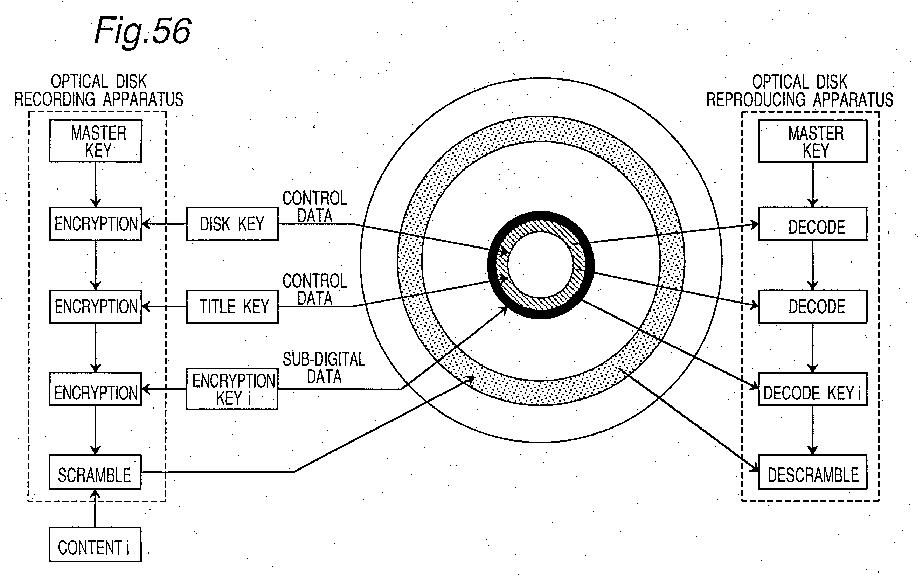

Furthermore, as shown in Fig. 56, the master key may be encrypted with the disk key and title key in the prior art DVD encryption technology, the encrypted master key could be further encrypted using the sub-digital data encryption key, and the resulting key may be used to scramble the content. Furthermore, by recording the encryption key as sub-digital data, the method of the present invention can be applied to all encryption methods for scrambling recording data with an encryption key.

This embodiment stores the secret key used as the sub-digital data to the optical disk reproducing apparatus 100 in advance, but this secret key could be written in response to a user command or secure communications with an external device.

Furthermore, this embodiment has been described with reference to DVD-RCM media, but the invention shall not be so limited and could be applied to CD-ROM, DVD-RAM, and other media. Furthermore, insofar as the pit (recording mark) can be written while slightly varying the shape or position of the recording mark, the invention can be used with media using various recording methods other than pit-and-land formation for data recording, including phase transition (phase change) and magnetization.

### <Embodiment 4>

In this embodiment of the invention the encryption key for encrypting the main digital data is recorded superposed as sub-digital data to the encrypted main digital data.

### (Optical Disk)

Fig. 56 shows how encryption keys are provided by block in an optical disk according to this embodiment of the invention. User data in each ECC block of the optical disk is encrypted with an encryption key for that block. The encryption keys used to encrypt each block are superposed to be recorded as sub-digital data to the recording data in the ECC block. The encryption key is recorded as sub-digital data superposed to the first 14,336 bytes (256 bytes x 56-bit encryption key) of the main digital data from the beginning of each ECC block.

This results in the encryption key used to encrypt a particular ECC block being superposed to the recording data in that ECC block as sub-digital data. When a legal DVD reproduction apparatus has a function for reading the encryption keys from the beginning of the ECC block read signal, it can therefore read the encrypted main digital data, but an illegal reproduction apparatus that does not have such a function cannot decrypt the encrypted main digital data. Copyright infringement through the distribution of illegal DVD reproduction apparatuses can therefore be avoided.

### (Optical Disk Recording Apparatus)

The configuration of an optical disk reproducing apparatus in this embodiment of the invention is the same as that shown in Fig. 35. Operation for encrypting and recording the main digital data while superposing the sub-digital data to the main digital data is described next.

To record ECC block i (i = 1 to n), the encryption key selector 101a receives a signal to start the main digital data encryption and recording mode and the encryption key recording mode, and a content ID signal indicating ECC block i from a controller (not shown in the figure), and then sends encryption key i to the encryption encoder 101b.

As described in embodiment 3 above, the encryption encoder 101b encrypts recording data J for ECC block i with encryption key i, and outputs the encrypted data to data selector 101c. The data selector 101c sends the encrypted data to formatter 102. The modulator 102a of formatter 102 performs 8-16 modulation to convert the encrypted data, and outputs channel signal B to the phase modulator 107.

Using the same sub-digital data recording method described in embodiment 3, the encryption key is recorded superposed to channel signal B. The formatter 102 sends the initial value to the pseudo-random number generator 104, and encryption key i is output to XOR gate 105. The pseudo-random number generator 104, based on the initial value and byte clock input thereto, outputs a pseudo-random number series to the XOR gate 105. Based on the input pseudo-random number series and the encryption key i, the XOR gate 105 outputs pseudo-random number series D to the PE modulator 106. The PE modulator 106 performs PE modulation to convert the pseudo-random number series D from the XOR gate 105 based on the timing signal from the timing generator 103, and outputs the resulting PE modulated signal E to the PE modulator 106.

The phase modulator 107 performs phase modulation so as to delay or advance the edges of channel signal B from the formatter 102 slightly based on the PE modulated signal E from the PE modulator 106, and outputs the modulated channel signal F to the recording channel 108.

The recording channel 108 produces a control signal turning the laser beam emitted to the DVD 10 on/off synchronized to 1/0 of the modulated channel signal F from the phase modulator 107, and sends the control signal to the recording head 109. Based on the control signal from the recording channel 108, the recording head 109 cuts the recording marks into a spiral pattern on the surface of the rotating DVD 10 by emitting a light beam while switching the laser beam on and off. As a result, modulated recording marks G consisting of optically readable pits and lands are formed in the DVD 10.

As a result of this operation encryption key i is recorded superposed to channel signal B as sub-digital data equivalent to 256 x 56 bytes of encryption data at the beginning of the ECC block.

This means that even if a normal disk reader is used to read all content on a DVD to which an encryption key is thus recorded and the read content is recorded directly to another DVD, only the main digital data will be copied and the sub-digital data (encryption key) recorded embedded in jitter will not be copied. The disk reader will therefore not be able to decrypt and play back the encrypted main digital data from the illegally copied DVD. Copyright infringement through the distribution of pirated editions can therefore be avoided.

Furthermore, this embodiment has been described with reference to DVD-ROM media, but the invention shall not be so limited and could be applied to CD-ROM, DVD-RAM, and other media. Furthermore, insofar as the pit (recording mark) can be written while slightly varying the shape or position of the recording mark, the invention can be used with media using various recording methods other than pit-and-land formation for data recording, including phase transition (phase change) and magnetization. The recording apparatus shown in Fig. 35 can be applied to this embodiment to have the same operation and configuration.

### (Optical Disk Reproduction Apparatus)

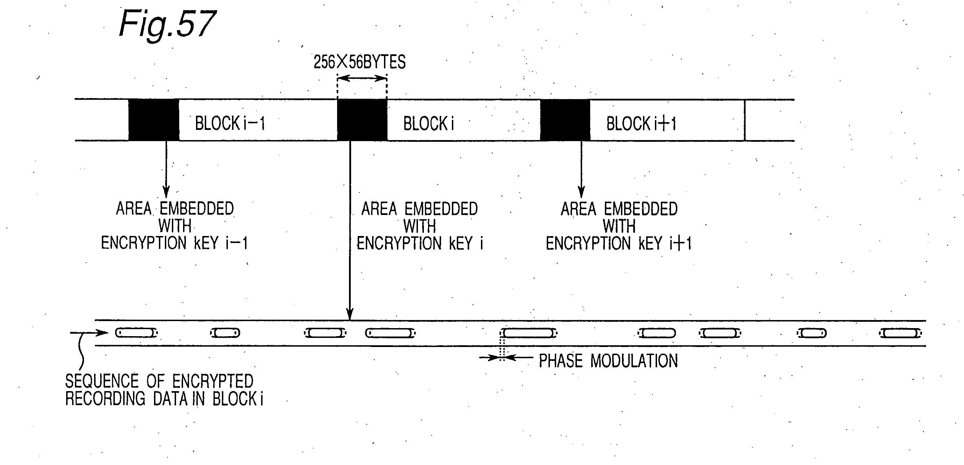

The configuration of an optical disk reproduction apparatus according to this embodiment of the invention is the same as shown in Fig. 44. The internal configuration of the encryption key reproducing circuit is changed as shown in Fig. 57.

The operation whereby this reproduction apparatus decrypts and reproduces the main digital data while extracting the sub-digital data superposed to the main digital data is described next with reference to decrypting and reproducing reproduction ECC block i (i = 1 to n).

When the reproduction signal processor 304 receives from a controller (not shown in the figure) a notification to start "the encryption key reading mode" and "the content decryption and reproduction mode", and a content ID signal identifying ECC block i, the demodulator 304a applies 16-8 demodulation to the red signal input from the reproduction channel and outputs the demodulated signal P to the decoder 304b and data selector 304c. The reproduction signal processor 304 also outputs the initial value stored to the initial value memory 304d to the pseudo-random number generator 306. Based on this initial value the pseudo-random number generator 306 generates pseudo-random number series (series M).

The synchronous detector 307 detects the correlation between the pseudo-random number series from the pseudo-random number generator 306 and the leading phase error signal H and lagging phase error signal I output from the clock extracting section 305, and outputs the result (positive correlation, negative correlation, no correlation) for each pseudo-random number (1 bit) to the encryption key reproducing circuit 800.

The encryption key reproducing circuit 800 reads the encryption keys based on the input reset signal and code sequence. The shift register 800a is a 56-bit (56-stage) shift register for shifting and storing the code sequence from the synchronous detector 307 using the reset signal from the clock extracting section 305 as the shift clock. Immediately after the 56-bit code sequence is input to the shift register 800a, the counter 800b outputs a load pulse to the encryption key memory 800c. The encryption key memory 800c stores the value from the shift register 800a at this time. Immediately after storing the encryption key i, the encryption key the memory 800c outputs the encryption key i to the reproduction signal processor 304.

The decryption decoder 304b subtracts the value of encryption key i input from the encryption key memory 800c from the 8-bit demodulated signal data input from the reproducing channel 303, and outputs to the data selector 304c. For example, if the encryption key i is 1, 1 is subtracted from the 8-bit recording data. The data selector 304c selects the output of decryption decoder 304b as the reproduction signal. The demodulated signal is thus decrypted according to encryption key i.

In addition to the benefits of the above first embodiment, this fourth embodiment of the invention records the encryption key for encrypting each ECC block superposed to the encrypted data of each ECC block. It is therefore necessary when reproducing the data to reproduce each ECC block, read the encryption key embedded in the main digital data, and decrypt the encrypted data. It is therefore possible to prevent data illegally reading data from a DVD without an encryption key decryption function.

Yet further, even if an illegal encryption key is input from an external device or software to read data from a legal copy, the encryption keys must be decrypted for every ECC block. This significantly increases the work involved in the encryption key decryption process, and effectively makes reading the data more difficult.

The present embodiment encrypts each block using an encryption key specific to that block, but the invention shall not be so limited. For example, the user data could be segmented into a plurality of recording data units, each recording data unit containing a specific number of recording data bytes or recording data in a specific area related to the track, ECC block, sector, or other physical recording structure of the disk. Each recording data unit is then encrypted with an encryption key specific to that recording data unit. User data security is further strengthened as the number of encryption keys increases.

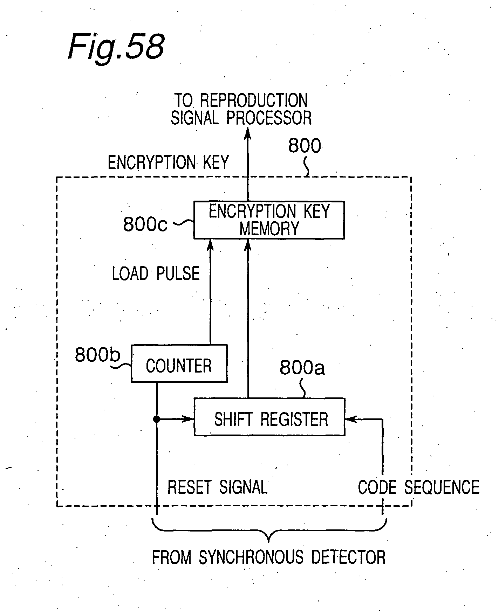

Furthermore, this embodiment records the encryption key for a particular block of data to the recording data stream in that block, but the invention shall not be so limited. For example, as shown in Fig. 58, the encryption key for a particular unit of recording data can be recorded superposed to the recording data of the preceding unit of recording data. When continuously reproducing temporally consecutive units of recording data, this method enables a desired recording data unit to be reproduced immediately (that is, without waiting to read the encryption key) because the encryption key needed to reproduce the data unit was previously read when the preceding unit was reproduced. It is thus possible to record the encryption key used to encrypt a particular unit of recording data superposed to the recording data in a different unit of recording data.

In an optical disk according to the third and fourth embodiments of the invention the encryption key is embedded to the main digital data as sub-digital data in a manner that makes reading difficult. The encryption key is therefore not copied when an optical disk is copied simply on the basis of recording mark presence. Decrypting the encrypted main digital data can therefore be prevented, and copyright infringement resulting from exactly copying digital content on an optical disk can therefore be prevented.

Furthermore, embedding the encryption key with jitter modulation makes decrypting the encryption key more difficult in an optical disk according to the third and fourth embodiments of the invention, and thus improves encryption key security.

Yet further, illegally reading recording data can be prevented with an optical disk according to the third or fourth embodiment of the invention because the encrypted recording data cannot be decrypted using an optical disk for which the encryption key cannot be read. Therefore, even if a dead copy of an optical disk containing the encryption key is made, the encrypted main digital data on the optical disk copy cannot be decrypted unless the encryption key embedded by jitter modulation is also copied, and the copyright can therefore be protected.

The present invention embeds the key needed to read disk content as sub-digital data embedded in the main digital data in a manner that makes reading difficult. The sub-digital data will therefore not be copied when an optical disk is copied simply on the basis of recording mark presence. This prevents making exact illegal copies of copyrighted digital content on an optical disk, and prevents decrypting the main digital data. As a result, the present invention makes it possible to prevent copyright infringement as a result of exactly copying copyrighted digital content on an optical disk.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

### It follows a list of further embodiments of the invention:

Embodiment 1. An optical disk comprising:
main digital data recorded by optically readable recording marks; and
sub-digital data superposed with the main digital data by slightly displacing position or shape of the recording marks and recorded to the disk,
wherein a plurality of areas each storing the same sub-digital data are provided on the disk for a single content recorded by the main digital data.

Embodiment 2. An optical disk comprising:
main digital data recorded by optically readable recording marks; and
sub-digital data superposed with the main digital data by slightly displacing position or shape of the recording marks and recorded to the disk,
wherein a plurality of areas each storing different sub-digital data is provided for a single content recorded by the main digital data.

Embodiment 3. The optical disk with the features of embodiment 1 or 2, wherein the plural areas are disposed at a predetermined radial position unit.

Embodiment 4. The optical disk with the features of embodiment 1 or 2, wherein the plural areas are disposed at a predetermined address unit.

Embodiment 5. The optical disk with the features of embodiment 1 or 2, wherein amount of the displacement differs in each area.

Embodiment 6. An optical disk comprising:
main digital data recorded by optically readable recording marks; and
sub-digital data superposed with the main digital data by slightly displacing position or shape of the recording marks and recorded to the disk,
wherein different sub-digital data is provided for different content recorded by the main digital data.

Embodiment 7. An optical disk comprising:
main digital data recorded by optically readable recording marks; and
sub-digital data superposed with the main digital data by slightly displacing position or shape of the recording marks and recorded to the disk,
wherein the sub-digital data is formed in an area different from a data area where content is recorded by the main digital data.

Embodiment 8. An optical disk comprising:
main digital data recorded by optically readable recording marks; and
sub-digital data superposed with the main digital data by slightly displacing position or shape of the recording marks and recorded to the disk,
wherein the sub-digital data is formed in an area different from a data area where content is recorded by the main digital data and a control area where control data is recorded.

Embodiment 9. The optical disk with the features of embodiment 1, 2, 6, 7 or 8,
wherein the sub-digital data is information for determining whether the disk or content is legal.

Embodiment 10. The optical disk with the features of embodiment 1, 2, 6, 7 or 8, further storing a pattern having a correlation to a pattern formed based on the sub-digital data.

Embodiment 11. The optical disk with the features of embodiment 1, 2, 6, 7 or 8, further storing information indicating where the sub-digital data is formed.

Embodiment 12. A reproducing method of reproducing an optical disk storing main digital data recorded by optically readable recording marks and sub-digital data, the sub-digital data being superposed with the main digital data and being recorded to the disk by slightly displacing positions or shapes of the recording marks in a track direction of the recording mark, the method comprising:
constructing a pattern based on the sub-digital data;
comparing the pattern with a predetermined key information; and
restricting a reproduction of content recorded by the main digital data when a correlation between the pattern and the key information is not confirmed.

Embodiment 13. The reproducing method with the features of embodiment 12, wherein the sub-digital data is reproduced at a specific reproduction time interval.

Embodiment 14. The reproducing method with the features of embodiment 12, wherein the key information is obtained via a network.

Embodiment 15. An optical disk comprising:
main digital data recorded by optically readable recording marks;
sub-digital data recorded by optically readable recording marks; and
sub-digital data management information used to extract the sub-digital data.

Embodiment 16. The optical disk with the features of embodiment 15, wherein the sub-digital data is recorded by phase modulation which displaces positions of recording mark edges a slight amount in a track direction of the recording marks, thereby the recording mark edges are formed at positions of phase leading or lagging by a predetermined small amount from edge positions of recording marks for recording only the main digital data.

Embodiment 17. The optical disk with the features of embodiment 15, wherein the sub-digital data management information comprises a initial value for a random number series.

Embodiment 18. The optical disk with the features of embodiment 15, wherein the sub-digital data is generated based on whether an accumulated value is in a predetermined range, the accumulated value is obtained by accumulating recording mark edge leading or lagging to a random number series of specific length, and the threshold value is stored in the sub-digital data management information.

Embodiment 19. The optical disk with the features of embodiment 15, wherein the sub-digital data management information comprises location information of the sub-digital data.

Embodiment 20. The optical disk with the features of embodiment 15, wherein the sub-digital data is recorded by switching phase modulation on and off according to recording mark length.

Embodiment 21. The optical disk with the features of embodiment 15, wherein the sub-digital data management information comprises length information for the recording marks determining whether phase modulation is to be on or off.

Embodiment 22. The optical disk with the features of embodiment 15, wherein the sub-digital data management information is recorded to a data area provided for storing control data on the optical disk.

Embodiment 23. An optical disk with the features of embodiment 15, wherein the sub-digital data management information is recorded to a data area provided for storing user data on the optical disk.

Embodiment 24. An optical disk with the features of embodiment 15, wherein the sub-digital data management information is pre-recorded to a Burst Cutting Area of the optical disk.

Embodiment 25. A reproducing apparatus for reproducing an optical disk,
the optical disk storing main digital data recorded by optically readable recording marks, sub-digital data recorded by phase modulation slightly displacing edge positions of the recording marks in a track direction of the disk, and sub-digital data management information used to extract the sub-digital data, the apparatus comprising:
a section for reproducing the main digital data from the optical disk; and
a section for extracting the sub-digital data.

Embodiment 26. The reproducing apparatus with the features of embodiment 25, wherein the sub-digital data extracting section extracts the sub-digital data based on information read from the sub-digital data management information on the optical disk.

Embodiment 27. A recording apparatus for recording main digital data to an optical disk by forming optically readable recording marks on the disk, the apparatus comprising:
a section for recording sub-digital data by phase modulation which displaces edge positions of the recording marks a slight amount in a track direction of the disk,
wherein the sub-digital data recording section forms the recording marks so that edges of the recording marks corresponding to the main digital data at positions of phase leading or lagging by a predetermined small amount, and
wherein the sub-digital data recording section includes a section for recording sub-digital data management information which is required to extract the sub-digital data.

Embodiment 28. An optical disk comprising:
main digital data recorded by optically readable recording marks; and
sub-digital data recorded by changing positions or shapes of specific recording marks a slight amount,
wherein the main digital data encrypted by the sub-digital data.

Embodiment 29. The optical disk with the features of embodiment 28, wherein the main digital data is segmented into a plurality of recording data groups using a group of specific recording data as a unit, and wherein the recording data group is encrypted by the sub-digital data corresponding to each group of specific recording data.

Embodiment 30. The optical disk with the features of embodiment 28, wherein the sub-digital data is recorded to an area where encrypted main digital data is recorded.

Embodiment 31. The optical disk with the features of embodiment 28, wherein the sub-digital data is recorded to an area different from the area where encrypted main digital data is recorded.

Embodiment 32. The optical disk with the features of embodiment 28, wherein the main digital data is segmented into a plurality of recording data groups by content unit.

Embodiment 33. The optical disk with the features of embodiment 28, wherein the main digital data is segmented into a plurality of recording data groups by radial position unit.

Embodiment 34. The optical disk with the features of embodiment 28, wherein the main digital data is segmented into a plurality of recording data groups by track unit.

Embodiment 35. The optical disk with the features of embodiment 28, wherein the main digital data is segmented into a plurality of recording data groups by ECC block unit.

Embodiment 36. The optical disk with the features of embodiment 28, wherein the main digital data is segmented into a plurality of recording data groups by sector unit.

Embodiment 37. The optical disk with the features of embodiment 28, wherein the plurality of recording data groups composing the main digital data include a group of unencrypted recording data.

Embodiment 38. The optical disk with the features of embodiment 28, wherein recording data in an encrypted recording data group includes partially unencrypted recording data.

Embodiment 39. The optical disk with the features of embodiment 28, wherein there are at least two sub-digital data for encrypting one recording data group.

Embodiment 40. An recording apparatus for recording main digital data to an optical disk by forming recording marks on the optical disk, the apparatus comprising:
a sub-digital data recording section for recording sub-digital data by changing positions or shapes of recording mark edges a slight amount; and
a main digital data encrypting section for encrypting the main digital data based on the sub-digital data.

Embodiment 41. The recording apparatus with the features of embodiment 40, wherein the sub-digital data recording section records the sub-digital data by phase modulation which displaces positions of the recording marks a slight amount in a track direction of the disk.

Embodiment 42. The recording apparatus with the features of embodiment 41, wherein the sub-digital data recording section records the sub-digital data in an area where the encrypted main digital data is recorded.

Embodiment 43. The recording apparatus with the features of embodiment 41, wherein the sub-digital data recording means records the sub-digital data in a different area from where the encrypted main digital data is recorded.

Embodiment 44. A reproducing apparatus for reproducing data from an optical disk,
the optical disk storing main digital data recorded by optically readable recording marks and sub-digital data, the main digital data being encrypted by the sub-digital data, and
wherein the apparatus comprises:
a detecting section for detecting the recording marks formed on the optical disk;
an sub-digital data extracting section for extracting the sub-digital data from a channel signal corresponding to a series of the detected recording marks; and
a decrypting section for decoding the encrypted main digital data based on the sub-digital data extracted by the extracting section.

Embodiment 45. The reproducing apparatus with the features of embodiment 44, wherein the sub-digital data extracting section comprises a clock extracting section for extracting a synchronized channel bit clock from the channel signal corresponding to the series of detected recording marks, and
the sub-digital data extracting section extracts the sub-digital data based on a phase difference between the channel signal and the channel bit clock.

Embodiment 46. The reproducing apparatus with the features of embodiment 44, wherein the sub-digital data extracting section extracts the sub-digital data from a channel signal corresponding to the series of recording marks in the area where the encrypted main digital data is recorded.

Embodiment 47. The reproducing apparatus with the features of embodiment 44, wherein the sub-digital data extracting section extracts the sub-digital data from a channel signal corresponding to the series of recording marks in an area different from the area where the encrypted main digital data is recorded.

Embodiment 48. An optical disk comprising:
main digital data recorded by optically readable recording marks; and
sub-digital data superposed with the main digital data by slightly displacing position or shape of the recording marks and recorded to the disk,
wherein a plurality of areas in which sub-digital data are recorded are provided according to a linear velocity of reproduction.

Embodiment 49. The optical disk with the features of embodiment 48, further comprising different sub-digital data.

Embodiment 50. An optical disk comprising:
main digital data recorded by optically readable recording marks; and
sub-digital data superposed with the main digital data by slightly displacing position or shape of the recording marks and recorded to the disk,
wherein a plurality of areas in which sub-digital data are recorded are provided, each sub-digital data area has the same sub-digital data and different slight amount for displacing.

## Claims

1. A reproducing method of reproducing an optical disk storing main digital data recorded by optically readable recording marks and sub-digital data, the sub-digital data being superposed with the main digital data and being recorded to the disk by slightly displacing positions or shapes of the recording marks in a track direction of the recording mark, the method comprising:
constructing a pattern based on the sub-digital data;
comparing the pattern with a predetermined key information; and
restricting a reproduction of content recorded by the main digital data when a correlation between the pattern and the key information is not confirmed,
wherein the reproduction is restricted by dropping the transfer rate to degrade image quality, or by performing intermittent reproduction.

2. The reproducing method according to claim 2, wherein the sub-digital data is reproduced at a specific reproduction time interval.

3. The reproducing method according to claim 2, wherein the key information is obtained via a network.
